# EUROPÄISCHE PATENTANMELDUNG

(11) **EP 4 033 627 A1**
(43) Veröffentlichungstag der Anmeldung: **27.07.2022**
(21) Anmeldenummer: 21153548.9
(22) Anmeldetag: 26.01.2021
(51) Int. Cl.: H02J 3/00, H02J 3/24, H02J 3/38

(54) **VERFAHREN ZUM ÜBERWACHEN EINES ELEKTRISCHEN VERSORGUNGSNETZES**

(71) Anmelder: Wobben Properties GmbH, 26607 Aurich (DE)
(72) Erfinder: Brombach, Johannes, 13437 Berlin (DE); Letzel, Marcus, 28832 Achim (DE); Holicki, Lukas, 28816 Stuhr (DE)
(74) Vertreter: Eisenführ Speiser

(57) **Zusammenfassung**

Die Erfindung betrifft ein Verfahren zum Überwachen eines elektrischen Versorgungsnetzes (500), wobei das elektrische Versorgungsnetz (500) eine Netzfrequenz und eine Netztopologie mit mehreren Netzknoten (Ki) aufweist, mehrere umrichtergeführte Einspeiseeinheiten (100) jeweils über einen Netzanschlusspunkt (118) an das elektrische Versorgungsnetz angeschlossen sind, und die Netzanschlusspunkte über die Netztopologie verteilt sind, umfassend die Schritte Erfassen jeweils wenigstens einer Knotenspannung (u(t)) an dem Netzanschlusspunkt oder einem dem Netzanschlusspunkt zugeordneten Netzknoten der mehreren Netzknoten, sodass mehrere Knotenspannungen erfasst werden, wobei jedem Netzanschlusspunkt bzw. Netzknoten ein Ort in der Netztopologie zugeordnet ist, der als Knotenort (Ki) bezeichnet wird, und die erfasste Knotenspannung durch einen Knotenphasenwinkel als Phasenwinkel der Knotenspannung gekennzeichnet ist, Zuordnen eines zugehörigen Knotenorts zu jeder Knotenspannung, und Ermitteln über die Netztopologie verteilter Netzzustände aus den erfassten Knotenspannungen, mit jeweils zugeordnetem Knotenort, insbesondere aus den Knotenphasenwinkeln oder Phasenbeziehungen zwischen wenigstens zwei Netzknoten.

## Beschreibung

Die vorliegende Erfindung betrifft ein Verfahren zum Überwachen eines elektrischen Versorgungsnetzes. Die Erfindung betrifft auch eine Überwachungsanordnung zum Überwachen eines solchen elektrischen Versorgungsnetzes.

Elektrische Versorgungsnetze sind bekannt. Sie dienen dazu, von Erzeugern erzeugte elektrische Leistung Verbrauchern zum Verbrauch bereitzustellen. Solche elektrischen Versorgungsnetze können sehr komplex sein, wie beispielsweise das europäische Verbundnetz. Als elektrisches Versorgungsnetz kann aber auch ein Teil eines solchen Netzes betrachtet und überwacht werden, wie beispielsweise das elektrische Versorgungsnetz Deutschlands oder Frankreichs als Teil des europäischen Verbundnetzes, um bei dem Beispiel zu bleiben. Solche elektrischen Versorgungsnetze weisen örtlich verteilte Erzeuger und damit Einspeiser auf, und örtlich verteilte Verbraucher. Sowohl die erzeugte und eingespeiste Leistung der Erzeuger als auch die verbrauchte Leistung der Verbraucher kann individuell schwanken, sogar zwischen 0 % und 100 %.

Das kann zu stark variierenden Leistungsflüssen in dem elektrischen Versorgungsnetz führen und das kann zu Schwingungen und sogar zu Instabilitäten führen.

Klassischerweise sind elektrische Versorgungsnetze so aufgebaut, dass sie mehrere große Erzeuger aufweisen, insbesondere große Kraftwerke mit Synchrongeneratoren, die direkt mit dem elektrischen Versorgungsnetz gekoppelt sind und dadurch in diese elektrische Leistung einspeisen. Bei dieser klassischen Struktur sind häufig die Betreiber der Kraftwerke auch die Betreiber des elektrischen Versorgungsnetzes bzw. eines erheblichen Abschnitts des elektrischen Versorgungsnetzes. Zur Steuerung gibt es daher entsprechende Leitzentralen, die in erster Linie die Erzeuger, also die genannten Großkraftwerke, steuern. Kleinere Verbraucher werden dabei eher statistisch berücksichtigt, wobei größere Verbraucher ggf. konkret hinsichtlich angeforderter Leistung berücksichtigt werden können.

Treten ungewöhnliche Leistungsschwankungen mit ungewöhnlichen Schwingungen oder sogar stabilitätskritische Situationen auf, oder andere Störungen, so kann die Leitzentrale hierauf reagieren. Häufig wird dies durch gut geschulte und erfahrene Personen in einer solchen Leitzentrale erledigt.

Zumindest einige elektrische Versorgungnetze oder zumindest Abschnitte von ihnen entwickeln sich aber zu einem elektrischen Versorgungsnetz, bei dem der Anteil eingespeister Leistung durch regenerative Energiequellen immer größer wird. Daraus ergeben sich wiederum vielfältige Änderungen. Besonders sind solche regenerativen Energiequellen meist kleinere, aber weiter verteilte Erzeuger, haben eine fluktuierende Leistung, sind teilweise durch spezielle Netztopologien angebunden und können sehr individuell auf Frequenz- und Spannungsänderungen des elektrischen Versorgungsnetzes reagieren, nämlich meist anders als direkt gekoppelte Synchrongeneratoren.

Damit kann es auch für eine Leitzentrale schwierig werden, das elektrische Versorgungsnetz wie bisher zu steuern. Besonders ist hervorzuheben, dass sich das elektrische Versorgungsnetz anders verhält als bisher und dass durch das Steuern der großen Erzeuger, besonders Großkraftwerke, weniger Einfluss auf das elektrische Versorgungsnetz genommen werden kann. Beispielsweise nimmt die stabilisierende Wirkung direkt gekoppelter Synchrongeneratoren am elektrischen Versorgungsnetz ab, wenn ihr Anteil abnimmt.

Um diese Probleme zu adressieren, gibt es meist umfangreiche Netzanschlussregeln, die für die regenerativen Energiequellen, also insbesondere Windenergieanlagen, Windparks und Photovoltaikanlagen, vorgeben, wie sie sich in welchen Situationen zu verhalten haben. Das beinhaltet besonders das Verhalten bei Spannungsänderungen, Frequenzänderungen und Netzfehlern.

Die Aufgabe der Netzsteuerung bleibt dennoch herausfordernd, jedenfalls in Grenzsituationen, und das Potential, erneuerbare Energiequellen zur Steuerung oder zumindest Beobachtung des elektrischen Versorgungsnetzes mit einzusetzen, scheint noch nicht gut ausgeschöpft zu sein.

Der vorliegenden Erfindung liegt somit die Aufgabe zu Grunde, zumindest eines der oben genannten Probleme zu adressieren. Insbesondere soll eine Lösung vorgeschlagen werden, mit der das Überwachen eines elektrischen Versorgungsnetzes verbessert werden kann, insbesondere unter Zuhilfenahme des Potentials, das regenerative Energiequellen, zumindest Windenergieanlagen und/oder Windparks, haben. Zumindest soll zu bisher bekannten Lösungen eine alternative Lösung vorgeschlagen werden.

Erfindungsgemäß wird ein Verfahren nach Anspruch 1 vorgeschlagen. Das Verfahren betrifft somit das Überwachen eines elektrischen Versorgungsnetzes, wobei das elektrische Versorgungsnetz eine Netzfrequenz und eine Netztopologie mit mehreren Netzknoten aufweist. Weiterhin sind mehrere umrichtergeführte Einspeiseeinheiten jeweils über einen Netzanschlusspunkt an das elektrische Versorgungsnetz angeschlossen und die Netzanschlusspunkte sind über die Netztopologie verteilt. Die Netzanschlusspunkte können dabei mehrere Kilometer bis hin zu mehreren hundert Kilometern voneinander beabstandet sein.

Umrichtergeführte Einspeiseeinheiten sind Einspeiseeinheiten, die mithilfe eines Umrichters in das elektrische Versorgungsnetz einspeisen. Ein solcher Umrichter kann auch als Wechselrichter bezeichnet werden. Jedenfalls kommt es hier auf die netzseitige Ausgestaltung der umrichtergeführten Einspeiseeinheit besonders an. Der Umrichter bzw. Wechselrichter kann also einen Wechselstrom nach Betrag und Phase erzeugen und in das elektrische Versorgungsnetz an dem jeweiligen Netzanschlusspunkt einspeisen.

Zur Durchführung des Verfahrens werden folgende Schritte vorgeschlagen. Es wird das Erfassen jeweils wenigstens einer Knotenspannung an dem Netzanschlusspunkt oder einem dem Netzanschlusspunkt zugeordneten Netzknoten der mehreren Netzknoten vorgeschlagen, sodass mehrere Knotenspannungen erfasst werden, wobei jedem Netzanschlusspunkt bzw. Netzknoten ein Ort in der Netztopologie zugeordnet ist, der als Knotenort bezeichnet wird. Es werden also mehrere insbesondere möglichst viele Netzknoten betrachtet und dort jeweils eine Knotenspannung erfasst.

An einem Netzanschlusspunkt ist häufig entsprechende Messtechnik vorhanden bzw. es wird ohnehin eine Messung durchgeführt. Ein Netzanschlusspunkt selbst kann somit auch einen Knotenort bilden. Es kommt aber auch in Betracht, dass eine Knotenspannung an einem Netzknoten erfasst wird, der einen Netzanschlusspunkt nicht unmittelbar bildet, diesem aber zugeordnet ist. Insbesondere ist ein solcher zugeordneter Netzknoten elektrisch in der Nähe des Netzanschlusspunktes, dem er zugeordnet ist. Die Knotenspannung eines solchen Netzknotens kann an dem Netzanschlusspunkt erfasst werden, indem an dem Netzanschlusspunkt gemessen wird. Entweder kann der Unterschied zwischen Netzanschlusspunkt und zugeordnetem Netzknoten vernachlässigt werden, oder herausgerechnet werden. Jedem Netzanschlusspunkt bzw. Netzknoten, für den also eine Knotenspannung erfasst wird, ist ein Ort in der Netztopologie zugeordnet, sodass dadurch ortsabhängige Knotenspannungen ermittelt werden. Es kann damit ein flächendeckendes Bild der Knotenspannungen erstellt werden.

Weiter ist die erfasste Knotenspannung durch einen Knotenphasenwinkel als Phasenwinkel der Knotenspannung gekennzeichnet. Außerdem wird das Zuordnen eines zughörigen Knotenortes zu jeder Knotenspannung vorgeschlagen und das Ermitteln über die Netztopologie verteilter Netzzustände aus den erfassten Knotenspannungen mit jeweils zugeordnetem Knotenort. Dadurch kann ein Bild verteilter Netzzustände, also ein Bild der Netzzustände eines Bereichs des elektrischen Versorgungsnetzes erstellt werden.

Die verteilten Netzzustände können besonders aus den Beziehungen der Knotenspannungen unterschiedlicher Knotenorte zueinander erstellt werden. Verteilte Netzzustände sind insbesondere Leistungsflüsse in Bereichen des elektrischen Versorgungsnetzes. Insbesondere ein Leistungsfluss zwischen zwei Knotenorten bildet einen Netzzustand und mehrere solcher Leistungsflüsse zwischen entsprechend mehreren Knotenorten bilden dann über die Netztopologie verteilte Netzzustände. Ein Leistungsfluss kann synonym auch als Lastfluss bezeichnet werden. Diese Begriffe werden hier vollständig austauschbar verwendet.

Es können aber auch andere Netzzustände ermittelt werden wie Netzstörungen einschließlich ihrer örtlichen Zuordnung in der Netztopologie. Auch Auslastungen einzelner Abschnitte der Netztopologie können Netzzustände bilden.

Auch die konkrete Topologie, insbesondere temporäre Änderungen wie Auftrennungen von Strompfaden, also insbesondere Übertragungsleitungen, können Netzzustände der Netztopologie bilden. Diese Netzzustände werden somit verteilt über das elektrische Versorgungsnetz bzw. die betrachtete Netztopologie erfasst und lassen dann vielfältige Rückschlüsse und ggf. Maßnahmen wie Maßnahmen zur Netzstabilisierung zu.

Dazu werden die erfassten Knotenspannungen im Zusammenhang mit ihrem zugehörigen Knotenort betrachtet, sodass zu jeder Knotenspannung ein zugehöriger Knotenort zugeordnet wird. Insbesondere kann dies in einer Datenbank realisiert werden, die zu jedem Eintrag einer Netzspannung einen Knotenort aufweist. Es kann auch umgekehrt zu jedem Knotenort eine aktuell erfasste Netzspannung angegeben werden.

Besonders wurde erkannt, dass verteilte Netzzustände besonders gut über die Betrachtung der Knotenphasenwinkel ermittelt werden können. Die Knotenphasenwinkel lassen besonders gut einen Vergleich zwischen Knotenspannungen unterschiedlicher Knotenorte zu. Hier kann besonders gut ein Differenzwinkel erkannt und ausgewertet werden. Der Differenzwinkel kann vergleichsweise unabhängig von der Spannungsamplitude zwischen mehreren Knotenorten verglichen werden.

Ein Knotenphasenwinkel kann einen mit der Wechselspannung umlaufenden Winkel bilden. Wird er mit einem Knotenphasenwinkel eines anderen Knotenorts verglichen, wobei beide zu vergleichenden Knotenphasenwinkel umlaufen, ist der Differenzwinkel, der sich aus diesem Vergleich ergibt, im stationären bzw. quasi stationären Zustand konstant. Erst bei transienten Vorgängen ändert sich dieser Differenzwinkel.

Vorzugsweise wird als Knotenphasenwinkel ein Phasenwinkel in Bezug auf einen Referenzwinkel betrachtet. Der Referenzwinkel, der auch als globaler Referenzwinkel bezeichnet bzw. ausgebildet sein kann, kann ebenfalls mit der Netzfrequenz umlaufen. Mit diesem umlaufenden Referenzphasenwinkel kann ein ebenfalls umlaufender Winkel der Knotenspannung verglichen werden und die Abweichung kann als Knotenphasenwinkel bezeichnet werden. Ein solcher Knotenphasenwinkel läuft nicht mit der Netzfrequenz um, sondern ist ein im Wesentlichen konstanter Wert. Im stationären bzw. quasi stationären Zustand ist er konstant, kann sich aber in einem transienten Zustand verändern.

Werden die Knotenphasenwinkel auf diese Art und Weise definiert, so kann ein Vergleich mit anderen Knotenphasenwinkeln, also von anderen Knotenorten, erleichtert werden. Wird ein Vergleich vorgenommen, ergibt sich dasselbe Ergebnis, als wenn die jeweiligen umlaufenden Winkel der zu Grunde liegenden Knotenspannungen verglichen werden würden. Jedenfalls wird vorzugsweise vorgeschlagen, dass jeder Knotenphasenwinkel jeweils einen Phasenwinkel in Bezug auf einen Referenzphasenwinkel einer Spannung beschreibt.

Es kommt aber auch in Betracht, die Knotenphasenwinkel nicht zu erfassen. Bspw. können äquivalente Werte betrachtet werden, wie Zeitpunkte, zu denen die jeweiligen Knotenspannungen einen Nulldurchgang haben, und/oder zu denen sie einen vorbestimmten Phasenwinkel aufweisen. Solche Zeitpunkte charakterisieren auch eine Phasenlage und ermöglichen einen Vergleich mit anderen Netzknoten. Es können dann die gleichen Beziehungen berücksichtigt werden, die oben zur unmittelbaren Auswertung von erfassten Knotenphasenwinkeln beschrieben wurden.

Wichtig ist auch eine Beziehung der Phasenlagen der Knotenspannungen, also der Netzknoten untereinander. Besonders eine Phasenwinkelbeziehung zwischen wenigstens zwei Netzknoten kann Aufschluss über Netzzustände geben. Eine solche Phasenwinkelbeziehung kann aber auch anders als unmittelbar aus erfassten Knotenphasenwinkeln bestimmt werden. Die beschriebenen Zeitpunkte von Nulldurchgängen oder vorbestimmten Phasenwinkeln bieten eine Möglichkeit. Es können aber auch Knotenspannungen, also ihre Signalverläufe, unmittelbar miteinander verglichen werden, um dadurch ihre Phasenlagen zueinander zu bestimmen, und damit die Phasenwinkelbeziehungen.

Die über die Netztopologie verteilten Netzzustände werden aus den erfassten Knotenspannungen ermittelt. Das kann insbesondere aus den Knotenphasenwinkeln erfolgen, oder insbesondere auch, wie beschrieben, aus Phasenbeziehungen zwischen wenigstens zwei Netzknoten. Die Knotenphasenwinkel sind ebenfalls über die Netztopologie verteilt und sie geben dadurch ein gutes Bild der Netztopologie. Das kann unmittelbar aus den Knotenphasenwinkeln bestimmt werden, oder indirekt, nämlich durch andere beschriebene Auswertungen und/oder dadurch, dass die Phasenwinkelbeziehungen betrachtet werden.

Der genannte Referenzphasenwinkel kann für alle Mess- oder Auswerteeinrichtungen, die die Knotenphasenwinkel bestimmen sollen, einheitlich bereitgestellt werden. Dazu kann er übertragen werden, wobei unterschiedliche Übertragungsverzögerungen herausgerechnet werden können. Er kann auch durch ein hochgenaues Zeitsignal von jeder Einheit, also zu jedem Knotenort und damit jeder Knotenspannung eigenständig erzeugt werden.

Grundsätzlich können auch umlaufende Phasenwinkel jeder Knotenspannung unmittelbar miteinander verglichen werden, wenn ihnen jeweils ein hochgenaues Zeitsignal zugeordnet ist.

Gemäß einem Aspekt wird vorgeschlagen, dass die ermittelten Netzzustände Netzzustände gemäß wenigstens einem Listenpunkt gemäß folgender Auflistung umfassen.
- Leistungsflüsse zwischen Netzknoten können Netzzustände bilden, also ein Leistungsfluss zwischen zwei Netzknoten kann einen Netzzustand bilden. Ein Leistungsfluss kann jeweils aus der Phasenverschiebung zwischen zwei Netzknoten erkannt werden und diese entspricht der Differenz zweier Knotenphasenwinkel, nämlich dieser beiden Netzknoten. Der konkrete Leistungsfluss kann dabei unter Kenntnis der Eigenschaft des Übertragungspfads, also insbesondere einer Übertragungsleitung, also insbesondere ihrer Impedanz, abgeleitet werden, oder durch einmalige Vergleichsmessungen, die natürlich wiederholt werden können.
- Die Netztopologie bestimmende Schaltzustände können Netzzustände bilden. Die Netztopologie bestimmende Schaltzustände können also Schaltzustände sein, die die Topologie betreffen, also insbesondere Übertragungswege. zu- oder abschalten. Besonders das Ab- oder Zuschalten von Übertragungsleitungen verändert die Netztopologie und die zugehörigen Schaltzustände sind die Netztopologie bestimmende Schaltzustände.
- Übertragungsengpässe in der Netztopologie können ebenfalls ermittelte Netzzustände bilden. Solche Übertragungsengpässe können sich zusammensetzen aus einer Kenntnis der Netztopologie und einer Kenntnis der Leistungsflüsse. Zusätzlich können weitere Informationen berücksichtigt werden, wie angekündigte Veränderungen der Leistungsentnahme durch Verbraucher, der Leistungseinspeisung durch Erzeuger und auch der Netztopologie. Letztere können insbesondere angekündigte Trennungen von Netzabschnitten sein, z.B. zu Wartungszwecken.

- Auch ein erneuerbarer Einspeiseanteil kann ein ermittelter Netzzustand sein. Ein erneuerbarer Einspeiseanteil beschreibt einen Anteil durch erneuerbare Energiequellen eingespeister Leistung zu insgesamt in die Netztopologie bzw. den Netzabschnitt eingespeister Leistung. Ein solcher erneuerbarer Einspeiseanteil kann aus den Leistungsflüssen und der zugehörigen Kenntnis der Topologie abgeleitet werden. Die Leistungsflüsse geben an, wo wieviel Leistung fließt und daher kann erkannt werden, von welchem Einspeiser und damit von was für einem Einspeiser diese Leistung stammt.
- Ein konventioneller Einspeiseanteil kann ein Netzzustand sein. Ein konventioneller Einspeiseanteil bezeichnet den Anteil durch konventionelle Generatoren, also durch direkt gekoppelte Synchrongeneratoren, eingespeister Leistung zu insgesamt in die Netztopologie bzw. den Netzabschnitt eingespeister Leistung. Der konventionelle Einspeiseanteil kann ebenfalls aus erkannten Leistungsflüssen und Kenntnis der Netztopologie einschließlich Art und Ort der Einspeiser ermittelt werden.
   Ein weiterer möglicher Netzzustand ist eine Netzlast des betrachteten elektrischen Versorgungsnetzes bzw. des Netzabschnitts. Eine Netzlast gibt die Größe verbrauchter Leistung des elektrischen Versorgungsnetzes bzw. des betrachteten Netzabschnitts an. Auch sie kann aus den Leistungsflüssen bestimmt werden. Aus den Leistungsflüssen lassen sich unmittelbar Leistungssenken ableiten und an den Leistungssenken wird somit die Leistung verbraucht, die gemäß den betrachteten Leistungsflüssen dorthin übertragen wird.

Gemäß einem Aspekt wird vorgeschlagen, dass in Abhängigkeit von den ermittelten verteilten Netzzuständen und optional in Abhängigkeit von wenigstens einer Wettervorhersage wenigstens eine Prognose bestimmt wird zu wenigstens einer zu erwartenden lokalen Netzauslastung und/oder zu wenigstens einem zu erwartenden Übertragungsengpass in der Netztopologie. Hier wurde besonders erkannt, dass aus den verteilten Netzzuständen nicht nur ein Ist-Zustand erfasst werden kann, sondern auch zu erwartende Situationen ableitbar sind. Eine zu erwartende lokale Netzauslastung als auch ein zu erwartender Übertragungsengpass wurden dabei als besonders wichtige Situationen erkannt und daher wird vorgeschlagen, für diese eine Prognose zu bestimmen.

Es wurde auch erkannt, dass regenerative Energiequellen zunehmend die Energieversorgung mitbestimmen und damit auch den Betrieb des elektrischen Versorgungsnetzes mit beeinflussen. Regenerative Energiequellen sind insbesondere Windenergieanlagen bzw. Windparks und Photovoltaikanlagen. Deren Betrieb und damit einspeisbare Leistung kann stark vom Wetter abhängen. Damit wurde erkannt, dass auch die örtliche Verteilung der Leistungseinspeisung vom Wetter abhängen kann. In Abhängigkeit einer Wettervorhersage können damit lokale Veränderungen der Leistungseinspeisung und damit der Leistungsübertragung und eine Änderung von Leistungsflüssen erkannt werden.

Solche lokalen Änderungen können sich nicht nur aus einer lokalen Wettervorhersage ergeben. Vielmehr wurde auch erkannt, dass sich örtliche Veränderungen dadurch ergeben können, dass regenerative Erzeuger und konventionelle Erzeuger nicht gleichmäßig über die Netztopologie verteilt sind und damit eine Zunahme oder Abnahme durch regenerative Energiequellen eingespeister Leistung zu einer lokalen Verschiebung der Leistungseinspeisung insgesamt führen kann. Nimmt der Wind zu, erhöht sich die eingespeiste Leistung an den Orten, an denen Windenergieanlagen oder Windparks einspeisen.

Eine Prognose zu wenigstens einer zu erwartenden lokalen Netzauslastung kann bereits aus den ermittelten verteilten Netzzuständen abgeleitet werden. Diese Netzzustände lassen Aufschlüsse über Leistungsflüsse zu bzw. die Leistungsflüsse können selbst Netzzustände bilden und daraus lässt sich auch auf das Verhalten angeschlossener Verbraucher schließen. Ein solches Verhalten kann durch kontinuierliche Überwachung über mehrere Tage oder noch längere Zeiträume beobachtet und daraus ein typisches Verhalten abgeleitet werden. Daraus kann somit ein Verhalten solcher Verbraucher vorhergesagt werden. Allein daraus lassen sich örtliche Veränderungen vorhersagen, die wiederum die örtliche, also lokale Netzauslastung beeinflussen. Somit ist daraus eine zu erwartende lokale Netzauslastung vorhersagbar, zumindest ist darüber eine Prognose bestimmbar.

Wird zusätzlich eine Wettervorhersage mit einbezogen, so kann zusätzlich, oder auch als alleiniges Kriterium, eine Veränderung eingespeister Leistung vorhergesagt werden und aufgrund der örtlich verteilten Netzzustände ist auch eine lokale Netzauslastung vorhersagbar bzw. darüber ist eine Prognose bestimmbar. Ist also die Netzauslastung an einem Ort bekannt, und lässt eine Wettervorhersage auf eine Veränderung eingespeister Windleistung schließen, die für diesen Ort relevant ist, ist auch die Veränderung der Netzauslastung an diesem Ort prognostizierbar.

Ebenfalls wurde erkannt, dass eine Prognose zu wenigstens einem zu erwartenden Übertragungsengpass in der Netztopologie möglich ist. Ebenso, wie oben zur Vorhersage einer lokalen Netzauslastung erläutert wurde, können auch Vorhersagen zur Leistungsübertragung gemacht werden. Außerdem sind Übertragungskapazitäten, z.B. von Fernübertragungsleitungen, bekannt. Im Ergebnis kann ein zu erwartender Übertragungsengpass vorhergesagt werden, z.B. aus einer zu hohen Netzauslastung an einem Ort. So kann also eine Prognose zu einem zu erwartenden Übertragungsengpass bestimmt werden.

Gemäß einem Aspekt wird vorgeschlagen, dass jeder Knotenspannung eine hochgenaue Messzeit zugeordnet wird, die eine Genauigkeit von einem Fünfhundertstel, oder genauer. Die Genauigkeit beträgt also wenigstens 0,002 der Periodendauer der Netzfrequenz, oder ist genauer.

Außerdem oder alternativ wird vorgeschlagen, dass zum Erfassen der Knotenspannungen aller Knotenorte eine gemeinsame Referenzzeit zu Grunde gelegt wird, um eine zeitliche Vergleichbarkeit der Knotenspannungen zu schaffen, wobei die gemeinsame Referenzzeit insbesondere durch ein gemeinsames Zeitsignal bereitgestellt wird, insbesondere durch ein Zeitsignal eines GPS. Zum Ermitteln über die Netztopologie verteilter Netzzustände ist die zeitliche Vergleichbarkeit der erfassten Knotenspannungen untereinander wichtig, insbesondere die Vergleichbarkeit der erfassten Knotenphasenwinkel der Knotenspannungen.

Um das zu realisieren, kann eine hochgenaue Messzeit verwendet werden. Eine übliche Netzfrequenz beträgt 50 Hz und die inverse Netzfrequenz ist somit eine Zeit, nämlich 0,02 s. Ein Zwanzigstel davon ist somit 1 ms. Die hochgenaue Messzeit wird also wenigstens auf 1 ms genau zugeordnet, weicht also von einer exakten Zeit maximal um 1 ms ab. Im Falle einer ebenfalls üblichen Netzfrequenz von 60 Hz ergibt sich somit ein etwas kleinerer Wert von etwa 0,83 ms.

Die inverse Netzfrequenz ist somit die Periodendauer. Durch eine ungenaue Messzeit kann es zu einer Verschiebung des aufgenommenen sinusförmigen Verlaufs der Netzspannung kommen. Diese Verschiebung ist auf ein Fünfhundertstel der Periodendauer begrenzt, wenn die Messzeit eine Genauigkeit von einem Fünfhundertstel der inversen Netzfrequenz, also der Periodendauer, aufweist, oder genauer ist. Mit anderen Worten ergibt sich ein maximaler Fehler von 0,72° für den durch eine Verschiebung verfälschten Phasenwinkel. Somit ist dieses Fünfhundertstel der inversen Netzfrequenz die Genauigkeit, die wenigstens verwendet werden sollte. Vorzugsweise wird eine höhere Genauigkeit gewählt.

Eine alternative Möglichkeit besteht darin, dass die gemeinsame Referenzzeit zu Grunde gelegt wird, die allen Messeinheiten bereitgestellt wird. Ein globales Positionssystem (GPS) liefert nicht nur exakte Positionen, es überträgt auch eine solche Referenzzeit. Die Referenzzeit von einem GPS zu empfangen ist somit eine einfache Realisierungsmöglichkeit. Bei der Variante, eine gemeinsame Referenzzeit zu Grunde zu legen, kommt es dabei nicht auf eine absolut hohe Genauigkeit an, sondern nur darauf, dass alle Knotenspannungen und damit alle Knotenphasenwinkel basierend auf derselben Zeit erfasst bzw. bestimmt werden. Gibt es eine Zeitabweichung zu einer absoluten Zeit, die aber bei allen Knotenspannungen und Knotenphasenwinkeln gleich ist, fällt der Fehler beim Vergleich der Knotenspannungen bzw. Knotenphasenwinkel untereinander heraus.

Gemäß einem Aspekt wird vorgeschlagen, dass für jeden Knotenort ein Knotenphasenwinkel erfasst wird. Der Knotenphasenwinkel kann somit als solcher für jeden Knotenort vorliegen und besonders für das Ermitteln der verteilten Netzzustände verwendet werden.

Außerdem oder alternativ wird vorgeschlagen, dass für die Knotenspannungen aller Knotenorte ein gemeinsamer Referenzwinkel bereitgestellt wird, und jeder Knotenphasenwinkel als Winkelverschiebung in Bezug auf den Referenzwinkel bestimmt wird, und/oder dass für jeweils zwei Knotenorte eine örtliche Phasenwinkeldifferenz als Differenz der jeweiligen Knotenphasenwinkel bestimmt wird, und insbesondere aus wenigstens einer örtlichen Phasenwinkeldifferenz zweier über einen Verbindungspfad verbundener Knotenorte ein Leistungsfluss in dem Verbindungspfad bestimmt wird.

Der Knotenphasenwinkel ist somit ein fester Wert, sofern ein stationärer oder quasi stationärer Zustand vorliegt. Ein solcher Knotenphasenwinkel wird also für jeden Knotenort und damit für jede Knotenspannung bzw. jeden Knotenphasenwinkel bestimmt. Als Ergebnis liegen dann viele Knotenphasenwinkel als im Wesentlichen konstante Werte verteilt über die Netztopologie vor. Diese können ein gutes Gesamtbild über das elektrische Versorgungsnetz bzw. den betrachteten Netzabschnitt geben.

Eine örtliche Phasendifferenz zwischen zwei Knotenphasenwinkeln, damit also eine Phasenwinkeldifferenz zwischen zwei Knotenorten, kann einen Aufschluss über den Leistungsfluss zwischen diesen beiden Knotenorten geben. Sind diese beiden Knotenorte über einen Leistungsflusspfad, insbesondere eine direkte Leitung, miteinander verbunden, so kann dadurch unmittelbar der Leistungsfluss über diese Leitung erfasst werden. Auf diese Art und Weise können viele Leistungsflüsse verteilt über das elektrische Versorgungsnetz bzw. den betrachteten Netzabschnitt, also verteilt über die Netztopologie, erfasst werden. Es ergibt sich ein umfassendes Bild über die geographische Verteilung vieler Leistungsflüsse. Das kann eine gute Basis für weitere Auswertungen geben, einschließlich solcher Auswertungen, wie sie oben bereits erläutert wurden.

Gemäß einem Aspekt wird vorgeschlagen, dass an dem elektrischen Versorgungsnetz mehrere Windenergieanlagen oder Windparks jeweils über einen der Netzanschlusspunkte an das elektrische Versorgungsnetz angeschlossen sind und jeweils eine Anlagensteuerung zum Steuern der Windenergieanlage bzw. eine zentrale Parksteuerung zum Steuern des Windparks aufweisen, wobei zum Erfassen jeweils einer der Knotenspannungen von der Anlagensteuerung bzw. der zentralen Parksteuerung erfasste Spannungswerte verwendet werden. Ein solcher Windpark speist in das elektrische Versorgungsnetz ein und verfügt auch über akkurate Messtechnik, um die Spannung nach Betrag und Phase genau zu erfassen. Zudem kann eine zentrale Parksteuerung zur Auswertung verwendet werden.

Ein solcher Windpark kann also die Spannung am Netzanschlusspunkt aufnehmen und die kann eine Knotenspannung bilden. Sie kann auch ausgewertet werden, insbesondere hinsichtlich Knotenphasenwinkel, der erfasst werden kann. Auch das Empfangen oder Erzeugen eines genauen Zeitsignals oder das Empfangen eines Referenzwinkels als Referenzwinkelsignal ist mit einer solchen Parksteuerung möglich.

Außerdem sind solche Parksteuerungen häufig über ein SCADA-System mit einer Leitstelle verbunden, sodass die erfasste Knotenspannung und der Knotenphasenwinkel übertragen werden können. Über die Kennung des Windparks kann auch die Zuordnung des zugehörigen Knotenortes vorgenommen werden. All das können viele Windparks durchführen und dadurch können zu vielen Knotenorten Knotenspannungen und Knotenphasenwinkel erfasst werden, um all diese Werte zu einem übergreifenden Bild für die Netztopologie zusammenzustellen. Ein solches umfassendes Bild kann also erstellt werden, ohne dass zusätzliche Hardware installiert zu werden braucht.

All diese Ausführungen zum Windpark mit zentraler Parksteuerung sind sinngemäß auch für die Windenergieanlage mit Anlagensteuerung zu verstehen.

Gemäß einem Aspekt wird vorgeschlagen, dass aus den Knotenspannungen und dem jeweiligen zugeordneten Knotenort ein Netzzustandsbild erstellt wird, das die über die Netztopologie verteilte Netzzustände wiedergibt, insbesondere über die Netztopologie verteilte Leistungsflüsse wiedergibt. Das Netzzustandsbild kann synonym auch als Darstellung über die Netztopologie verteilter Netzzustände bezeichnet werden. Es kann eine geografische Darstellung im Sinne einer Landkarte sein, in die an den jeweils erfassten Orten die Leistungsflüsse, oder andere Netzzustände, eingetragen sind.

Statt einer geografischen Karte oder Landkarte kann auch eine funktionelle Karte oder Strukturkarte der Netztopologie verwendet werden, die die Knotenorte aufweist, einschließlich ihrer Verbindungen und natürlich der darzustellenden Netzzustände, ohne dass aber die Anordnung der Knotenorte auf einer solchen Darstellung eine maßstabsgerechte Wiedergabe der tatsächlichen geografischen Verteilung ist.

Ein solches Netzzustandsbild, das im Übrigen auch über eine Zeit berechnet werden kann, also insbesondere ohne unmittelbar Knotenphasenwinkel zu erfassen, kann somit einen guten Überblick über die Netzzustände der Netztopologie geben. Besonders bei Leistungsflüssen ergibt sich somit ein Gesamtbild, das auch Rückschlüsse auf Quellen und Senken zulässt. Auch Engpässe oder zumindest hohe Leistungsflussdichten sind leicht erkennbar. Ein Netzzustandsbild kann vorzugsweise aber auch derart digitalisiert sein, dass die Daten maschinell weiterverarbeitbar sind.

Insbesondere wird vorgeschlagen, dass jeweils eine der Knotenspannungen durch einen Spannungszeiger mit einem Zeitsignal beschrieben wird. Ein solcher Spannungszeiger gibt mit seiner Länge die Amplitude der erfassten Spannung an und mit seiner Richtung den Knotenphasenwinkel. Insbesondere kann der Spannungszeiger mit der Netzfrequenz umlaufen, sodass auch der Knotenphasenwinkel sich ständig verändert, also mit der Netzfrequenz umläuft. Diesem Spannungszeiger wird ein Zeitsignal zugeordnet, sodass viele Spannungszeiger vieler Spannungsknoten durch das Zeitsignal vergleichbar werden. Anderenfalls bestünde die Gefahr bei dem Vergleich mehrerer umlaufender Spannungszeiger, dass Spannungszeiger unterschiedlicher Zeitpunkte verglichen werden. Besonders der Vergleich der Phasenwinkel dieser Spannungszeiger wäre dann nicht mehr aussagekräftig. Durch die Verwendung des Zeitsignals wird das vermieden.

Somit wird vorgeschlagen, solche Spannungszeiger für jeden der Knotenorte zu bestimmen und die Spannungszeiger zentral auszuwerten. Dafür kann insbesondere ein Zentralrechner verwendet werden. Sind beispielsweise Windparks involviert, so kann einer der zentralen Parkrechner der Windparks diesen Zentralrechner bilden. Es kommt auch in Betracht, dass eine Leitzentrale die zentrale Auswertung vornimmt, insbesondere einen Zentralrechner aufweist.

Aus diesen Spannungszeigern, die also mithilfe des Zeitsignals aufeinander abgestimmt, also synchronisiert sind, und dem jeweiligen zugeordneten Knotenort kann das Netzzustandsbild erstellt werden. Als eine alternative Möglichkeit wird hier vorgeschlagen, zu den Knotenorten jeweils Zeitpunkte mit jeweils zugeordneten Phasenwinkeln und optional einer aktuellen Netzfrequenz zu übermitteln bzw. zu verwenden. Durch die übermittelte oder bekannte Netzfrequenz lassen sich Phasenbeziehungen untereinander ermitteln. Eine Winkeldifferenz zwischen den Spannungen der beiden Knotenorte lässt sich aus der Zeitdifferenz berechnen, die dazu mit der Frequenz und 360° multipliziert werden kann, um die Winkeldifferenz in ° zu erhalten.

Zunächst kann ein Bild über die Knotenspannungen und Knotenphasenwinkel erstellt werden, als Zwischenprodukt. Das ist aber nur optional vorgesehen.

Es können dann weiter aus den Knotenspannungen mit jeweils zugeordnetem Knotenort Netzzustände bestimmt werden. Insbesondere kann jeweils aus zwei Spannungszeigern mit jeweils zwei zugeordneten Knotenorten ein Leistungsfluss zwischen diesen beiden Knotenorten als Netzzustand ermittelt werden. So können viele Netzzustände verteilt über die Netztopologie bestimmt und dann zu dem Netzzustandsbild zusammengesetzt werden.

Gemäß einem Aspekt wird vorgeschlagen, dass die Netztopologie mehrere örtlich verteilte Übertragungsknoten aufweist, wobei ein Übertragungsknoten jeweils einem der Netzknoten entsprechen kann, und ein bzw. das Netzzustandsbild eine Netzgruppenzuordnung vorhandener Windenergieanlagen oder Windparks aufweist, die für mehrere der Übertragungsknoten jeweils wenigstens angibt, mit welchen der Windenergieanlagen oder Windparks er ohne Zwischenschaltung eines weiteren Übertragungsknotens verbunden ist. Dadurch kann eine technisch sinnvolle Gruppierung vorgenommen werden, bei der im Grunde alle Windenergieanlagen und Windparks in einer Gruppe zusammengefasst sind, die ihre Leistung über denselben Übertragungsknoten übertragen. Ein Übertragungsknoten kann somit als besonderer Netzknoten verstanden werden, an dem sich wenigstens drei Strompfade, insbesondere Leitungen treffen. Jeder Netzknoten und Übertragungsknoten ist ein Knoten im Sinne des Kirchhoffschen Knotensatzes.

Ein Übertragungsknoten kann insbesondere einen Netzknoten bilden, an dem Einspeiseströme mehrerer Erzeuger, insbesondere dezentraler Erzeuger wie Windenergieanlagen oder Windparks, zusammengeführt werden.

Außerdem oder alternativ ist vorgesehen, dass das Netzzustandsbild die aktuelle Netztopologie wiedergibt. Hierin liegt besonders der Vorteil, dass das Netzzustandsbild die gesamte Netztopologie umfasst und für genau diese örtlich verteilten Informationen bereitstellt, insbesondere die Netzzustände zuordnet bzw. darstellt. Eine solche aktuelle Netztopologie kann auch eine vorstehend beschriebene Gruppenbildung enthalten, sodass die beiden genannten Merkmale dadurch kombiniert werden können.

Besonders kann auch aus einem Netzzustandsbild mit oder für die aktuelle Netztopologie viel Information bereitgestellt und genutzt werden. Bei der Darstellung der aktuellen Netztopologie kann auch enthalten sein, ob Netzabschnitte oder Übertragungsverbindungen aufgetrennt oder geschlossen sind. Es könnten auch zugeschaltete oder abgetrennte Netzabschnitte, Einspeiser und/oder Verbraucher enthalten sein, nämlich insbesondere ob diese zugeschaltet oder abgetrennt sind.

In ein solches Netzzustandsbild werden dann die entsprechenden Netzzustände eingetragen, insbesondere die erläuterten Leistungsflüsse. Die aktuelle Netzsituation ist dadurch gut und räumlich zugeordnet darstellbar.

Gemäß einem Aspekt wird vorgeschlagen, dass in Abhängigkeit von den erfassten Knotenspannungen und optional in Abhängigkeit von einer Wettervorhersage und/oder von einer Bedarfsvorhersage eine zeit- und ortsabhängige Leistungsprognose verfügbarer und/oder benötigter Leistung erstellt wird, die zu einigen oder allen Netzknoten und/oder Übertragungsknoten jeweils eine zeitliche Prognose, insbesondere einen zeitlichen Verlauf einer Prognose über bereitstellbare und/oder benötigte Leistung angibt. Dazu wird weiter vorgeschlagen, dass die Prognose über bereitstellbare Leistung insbesondere eine Prognose über durch die umrichtergeführten Einspeiseeinheiten bereitstellbare Leistung ist, insbesondere eine Prognose über durch Windenergieanlagen und/oder Windparks bereitstellbare Leistung ist.

Es wird somit vorgeschlagen, eine zeit- und ortsabhängige Leistungsprognose zu erstellen. Diese Leistungsprognose gibt an, wo in der Netztopologie, also wo in dem elektrischen Versorgungsnetz bzw. betrachteten Netzabschnitt wieviel Leistung verfügbar ist und/oder benötigt wird. Die Leistungsprognose kann also sowohl die Einspeiser als auch die Verbraucher betreffen. Dies passiert basierend auf den erfassten Knotenspannungen, also insbesondere auch basierend auf den Knotenphasenwinkeln. Dadurch kann nicht nur generell ein umfassendes Bild besonders über Leistungsflüsse erstellt werden, sondern es können auch Veränderungen prognostiziert werden.

Aus in der Vergangenheit aufgenommenen Werten, insbesondere für die verteilten Leistungsflüsse können bereits solche Vorhersagen abgeleitet werden. Selbst die verfügbare Leistung regenerativer Erzeuger kann zu einem gewissen Grad abgeschätzt werden. Besonders für Photovoltaikanlagen ist abschätzbar, dass sie tagsüber Strom erzeugen, nachts aber nicht. Diese Aussage ist selbst ohne Wettervorhersage möglich.

Eine Verbesserung ergibt sich aber, wenn außerdem eine Wettervorhersage verwendet wird. Ihr Einfluss auf örtliche Leistungsprognosen wurde oben bereits erläutert. Da eine Wettervorhersage auch über einen Zeitraum aufgenommen werden kann, ergibt sich dadurch auch eine Zeitabhängigkeit.

Ein Bedarf, also wieviel Leistung angeschlossene Verbraucher wo und zu welchen Zeiträumen benötigen, kann aus früher aufgenommenen Zusammenhängen abgeleitet werden. Besonders wenn die verteilten Netzzustände, insbesondere Leistungsflüsse, bereits über mehrere Tage oder sogar Wochen, Monate oder selbst Jahre aufgenommen wurden, ist regelmäßig ein Muster erkennbar. Z.B. wiederholen sich Zyklen von energieverbrauchenden Fabriken. Auch Städte weisen Muster auf, wann wieviel Leistung benötigt wird.

Ergänzend kann eine Bedarfsvorhersage eingebunden werden. Eine Bedarfsvorhersage kann zwar solche bekannten Muster auch beinhalten, sie kann aber zusätzlich Leistungsanfragen beinhalten, wenn z.B. industrielle Verbraucher Zeiträume mit bestimmten Leistungen angeben. Insbesondere können solche Leistungsbedarfe bei Stromvermarktern angefragt werden und dort können dann auch entsprechende Bedarfsvorhersagen erstellt werden.

Somit kann unter zusätzlicher Berücksichtigung einer Bedarfsvorhersage, die einen Leistungsbedarf sowohl für konkrete Verbraucher und/oder Orte als auch für Zeiträume beinhaltet, besonders eine zeit- und ortsabhängige Leistungsprognose benötigter Leistung erstellen bzw. dieser Teil der Leistungsprognose kann erstellt werden. Der Leistungsbedarf kann aber auch in die Leistungsprognose verfügbarer Leistung einbezogen werden.

Werden beispielsweise zu bestimmten Zeiten Bedarfsspitzen erkannt, so kann das zur Folge haben, dass entsprechende Kraftwerke vorbereitet werden, solche Bedarfsspitzen zu bedienen. Besonders kommt in Betracht, dass beispielsweise dafür ein Gaskraftwerk in Betrieb genommen wird. Der Ort eines solchen Gaskraftwerks, um bei dem Beispiel zu bleiben, ist bekannt und wenn bekannt ist, dass dieses zur Deckung einer Bedarfsspitze in Betrieb genommen wird und entsprechende Leistung einspeisen wird, die Leistung also verfügbar ist, kann dies in die zeit- und ortsabhängige Leistungsprognose einfließen.

Insbesondere wird aber vorgeschlagen, dass die zeit- und ortsabhängige Leistungsprognose verfügbarer Leistung, bzw. dieser Anteil der Leistungsprognose sich auf die Prognose durch unrichtergeführte Einspeiseeinheiten bereitstellbarer Leistung bezieht. Umrichtergeführte Einspeiseeinheiten sind üblicherweise solche von regenerativen Energiequellen, die wiederum üblicherweise fluktuierende Energiequellen sind. Dafür ist es wichtig, verfügbare Leistung hierfür zu prognostizieren, um auch eine Netzauslastung ableiten zu können. Besonders Windenergieanlagen und Windparks können eine signifikante Leistungsmenge bereitstellen und das elektrische Versorgungsnetz dabei zumindest lokal beeinflussen. Daher ist es sinnvoll, das zu berücksichtigen und über die zeit- und ortsabhängige Leistungsprognose einzuplanen.

Gemäß einem Aspekt wird vorgeschlagen, dass das Netzzustandsbild die zeit- und ortsabhängige Leistungsprognose umfasst. Somit kann diese zeit- und ortsabhängige Leistungsprognose gut erfasst werden. Die zeitabhängige Berücksichtigung in dem Netzzustandsbild kann dadurch erreicht werden, dass das Netzzustandsbild aus mehreren Teilbildern besteht, von denen jeweils eines die gesamte Netztopologie zeigt, aber einem bestimmten Zeitpunkt zugeordnet ist. Insbesondere kann ein Netzzustandsbild, das Netzzustände darstellt, insbesondere Leistungsflüsse, durch die zeit- und ortsabhängige Leistungsprognose verbessert bzw. erweitert werden.

Gemäß einem Aspekt wird vorgeschlagen, dass das elektrische Versorgungsnetz in Abhängigkeit von den erfassten Knotenspannungen, insbesondere in Abhängigkeit von dem Netzzustandsbild, gesteuert wird. Das Steuern kann insbesondere dadurch erfolgen, dass das elektrische Versorgungsnetz zum Ansteuern von Schaltern des elektrischen Versorgungsnetzes zum Verändern der Netztopologie gesteuert wird, und/oder dass eine, mehrere oder alle der umrichtergeführten Einspeiseeinheiten gesteuert werden.

Solche Schalter können besonders Netztrennschalter sein und dadurch kann die Netztopologie verändert werden. Beispielsweise können Übertragungsleitungen dadurch zugeschaltet oder abgeschaltet werden. Das Ansteuern der Schalter kann auch beinhalten, dass geplante Abschaltungen verhindert oder auf einen geeigneteren Zeitpunkt verschoben werden.

Hier wurde besonders erkannt, dass Leistungsflüsse zu Engpässen führen können, besonders, wenn Übertragungsleitungen oder andere Leistungsflusspfade getrennt sind und dadurch an anderen Stellen Leistungsflussspitzen auftreten können, die möglicherweise zu hoch sind oder zu nah an eine Obergrenze kommen. Durch das Schalten entsprechender Schalter kann dann ggf. ein neuer Pfad gebildet werden, oder eine überlastungsgefährdete Übertragungsleitung wird von einem Teil des Versorgungsnetzes abgetrennt, sodass von diesem abgetrennten Teil keine Leistung über diese überlastungsgefährdete Übertragungsleitung fließen kann.

Es wurde aber auch erkannt, dass eine andere Alternative besteht, die mit dem Schalten der Schalter im elektrischen Versorgungsnetz kombiniert werden kann, nämlich umrichtergeführte Einspeiseeinheiten zu steuern. Umrichtergeführte Einspeiseeinheiten sind insbesondere Einspeiseeinheiten von bzw. mit erneuerbaren Energiequellen, insbesondere Windenergieanlagen und Windparks. Diese sind über das elektrische Versorgungsnetz bzw. die Netztopologie verteilt und können auch zum Erfassen all der Knotenspannungen und Knotenphasenwinkel eingesetzt werden. Sie sind dann sowieso in das Verfahren zum Überwachung eingebunden und können dann auch zum Steuern mit verwendet werden.

Es wurde dabei auch erkannt, dass für die Netzstabilität besonders eine Überlastung gefährlich werden kann. Eine Überlastung kann durch einen zu großen Leistungsfluss in einem Übertragungspfad, insbesondere an einer Übertragungsleitung auftreten. Überschreitet hier ein Leistungsfluss einen Grenzwert, kann es zum automatischen Abtrennen durch eine vorgeschriebene Sicherheitsabschaltung kommen. Wird hierbei eine Übertragungsleitung abgetrennt, sucht sich der- dann ohnehin große - Leistungsfluss einen neuen Pfad, wo es ebenfalls zu einer Erhöhung des Leistungsflusses und resultierenden Abtrennung kommen kann. Die verbleibenden Übertragungsleitungen werden dann immer größere Probleme haben, die Leistungsflüsse zu übertragen.

Hier wurde besonders erkannt, dass solche Probleme vergleichsweise schnell auftreten können. Der Anstieg eines Leistungsflusses kann schnell erfolgen und einen ersten Grenzwert erreichen und kurze Zeit später einen zweiten Grenzwert, der zum Abschalten führt. Windenergieanlagen sind dabei sehr schnelle Regelungseinheiten, die sehr schnell ihre Leistung reduzieren können und dadurch in der Lage sind, einen entsprechenden Leistungsfluss schnell genug zu reduzieren, um das Erreichen der exemplarisch genannten zweiten Stufe zu verhindern.

Es kommt aber auch in Betracht, dass bereits vorzeitig, bevor eine erste Grenze erreicht wird, die Leistung bereits reduziert wird. Es kommt hinzu, dass Windenergieanlagen und Windparks, oder auch andere umrichtergeführten Einspeiseeinheiten, meist lokal weit verteilt sind. Dadurch kann gezielt an den konkreten Orten, an denen ein erhöhter Leistungsfluss auftreten kann oder auftritt, eingegriffen werden und die Leistung reduziert werden. Besonders dadurch kann dem vorgeschlagenen Verfahren zum Überwachen eines elektrischen Versorgungsnetzes eine große Bedeutung beikommen. Es kann nämlich lokale Netzzustände erkennen und damit gezielt auch Gegenmaßnahmen auslösen.

Gemäß einem Aspekt wird vorgeschlagen, dass die aus den erfassten Knotenspannungen ermittelten Netzzustände, insbesondere ermittelte Leistungsflüsse, mit gemessenen oder aus anderen Messwerten als den Knotenspannungen ermittelten Netzzuständen verglichen werden, sodass ein Netzzustandsvergleich gleicher, aber unterschiedlich erfasster Netzzustände vorgenommen wird. Darauf aufbauend wird vorgeschlagen, dass das Ermitteln der Netzzustände aus den erfassten Knotenspannungen in Abhängigkeit von dem Netzzustandsvergleich angepasst wird, um eine Genauigkeit der Netzzustände zu verbessern.

Hier wurde besonders erkannt, dass das Erfassen der Netzzustände, insbesondere der Leistungsflüsse schnell und an vielen Knotenpunkten zugleich durchgeführt und so zu einem umfassenden Bild zusammengesetzt werden kann. Das konkrete Messen von Netzzuständen, oder das anderweitige Erfassen der Netzzustände kann aber ggf. mit höherer Genauigkeit erfolgen. Insbesondere kann an Übertragungsleitungen eine konkrete Messung von Strom und Spannung vorgenommen werden.

Auch das konkrete Messen des übertragenen Stroms an der beispielhaft genannten Übertragungsleitung und das Messen der dabei über die Übertragungsleitung abfallenden Spannung, also das Messen der Spannung am Anfang und am Ende der Leitung, können zu einer hohen Genauigkeit führen. Es kommt auch in Betracht, unmittelbar eine Leistungsmessung durchzuführen. Solche Messungen können auch temporär durchgeführt werden, mit mobilen Messinstrumenten. Besonders kommt in Betracht, dass neu installierte Übertragungsleitungen oder andere Übertragungspfade vermessen werden, um ein weiteres Beispiel zu nennen.

Solche Messungen können aber häufig individuell durchgeführt werden und/oder so, dass diese Messungen nicht unmittelbar in ein übergreifendes Überwachungssystem eingebunden sind oder in eine Steuerung eingebunden sind. Mit anderen Worten sind solche Messergebnisse häufig nur offline verfügbar, selbst wenn eine solche Messung dauerhaft durchgeführt werden sollte bzw. die Messeinrichtung dauerhaft installiert ist.

Somit wird nun vorgeschlagen, solche hochgenauen Messungen zu verwenden, um die schnelleren und umfassenderen Messungen, die ständig durchgeführt werden können, also die Erfassung der Knotenspannungen und daraus Ableitung der Netzzustände, in ihrer Genauigkeit zu verbessern. Insbesondere wird somit vorgeschlagen, das Ermitteln der Netzzustände aus den erfassten Knotenspannungen zu adaptieren.

Insbesondere kann das Ermitteln der Netzzustände aus den erfassten Knotenspannungen mittels einer Berechnungsvorschrift durchgeführt werden und diese Berechnungsvorschrift kann in Abhängigkeit von dem Netzzustandsvergleich angepasst werden, also adaptiert werden. Eine solche Berechnungsvorschrift wird also in Abhängigkeit von diesen genaueren Messungen, also basierend auf diesen genaueren Messungen adaptiert.

Eine solche Adaption kann beispielsweise so durchgeführt werden, dass bei dem Netzzustandsvergleich ein Verhältnis gebildet wird zwischen einem aus erfassten Knotenspannungen ermittelten Netzzustand und einem gemessenen oder aus anderen Messwerten ermittelten Netzzustand. Es wird also ein Verhältnis gebildet zwischen einem potentiell weniger genau erfassten Netzzustand und einem genauer erfassten Netzzustand. Dieses Verhältnis kann dann zu einer Korrektur, im einfachsten Fall zu einem Korrekturfaktor der Berechnungsvorschrift führen. Insbesondere kann der Korrekturfaktor dem Kehrwert des ermittelten Verhältnisses entsprechen.

Es kommen aber auch andere Möglichkeiten in Betracht, wie bspw. eine Abweichung zwischen diesen beiden Netzzuständen, die in dem Netzzustandsvergleich verglichen werden, über einen Regler mit Integralanteil auszuregeln. Dafür kann dieser Regler mit Integralanteil eine Abweichung als Eingangsgröße erhalten, nämlich als Regelfehler, und daraus einen Reglerausgang bestimmen, der bspw. mit dem aus den erfassten Knotenspannungen ermittelten Netzzustand multipliziert wird. Dadurch kann erreicht werden, dass auch hier die Multiplikation mit einem Korrekturfaktor durchgeführt wird, dieser Korrekturfaktor aber auch dann bestehen bleibt, wenn es gelungen ist, den Unterschied zwischen den beiden unterschiedlich erfassten Netzzuständen auf null zu reduzieren.

Natürlich kommen auch weitere Möglichkeiten in Betracht, z.B. die Berechnungsvorschrift, wenn sie komplexer ist, in internen Parametern zu adaptieren. Hier kommt besonders in Betracht, dass die Berechnungsvorschrift ein Modell des betreffenden Netzabschnitts umfasst, in dem sich die entsprechenden Netzknoten und der ermittelte Netzzustand befinden. Natürlich kommt auch in Betracht, dass eine Berechnungsvorschrift mehrere Netzzustände für mehrere Orte aus mehr als zwei Knotenspannungen bestimmt. Das kann mit einem entsprechend komplexen Modell des Teils des elektrischen Versorgungsnetzes durchgeführt werden, in dem diese Knoten bzw. Knotenorte liegen und die Netzzustände bestimmt werden sollen.

Parameter dieser Berechnungsvorschrift, insbesondere dem zu Grunde liegenden Modell, können dann adaptiert werden. Beispielsweise kann bei den genaueren Messungen des Netzzustands ein Wert für Bauteilgrößen abgeleitet werden, wie beispielsweise Werte für involvierte Impedanzen. Bei der Messung eines Leistungsflusses einer Übertragungsleitung kann ihre Impedanz bestimmt werden. Das kann ggf. bei entsprechend mehreren Messungen für mehrere Übertragungsleitungen durchgeführt werden. Eine solche Impedanz bzw. die mehreren Impedanzen, oder andere Parameter, können Teil der Berechnungsvorschrift sein, insbesondere eines zu Grunde gelegten Modells. Genau diese Werte können basierend auf den genaueren Messungen adaptiert werden.

Erfindungsgemäß wird auch eine Überwachungsanordnung zum Überwachen eines elektrischen Versorgungsnetzes vorgeschlagen. Diese Überwachungsanordnung geht von einem elektrischen Versorgungsnetz aus, das eine Netzfrequenz und eine Netztopologie mit mehreren Netzknoten aufweist. Mehrere umrichtergeführte Einspeiseeinheiten sind jeweils über einen Netzanschlusspunkt an das elektrische Versorgungsnetz angeschlossen, und die Netzanschlusspunkte sind über die Netztopologie verteilt. Daran angepasst umfasst die Überwachungsanordnung
- mehrere Erfassungseinrichtungen, vorbereitet zum Erfassen jeweils wenigstens einer Knotenspannung an dem Netzanschlusspunkt oder einem dem Netzanschlusspunkt zugeordneten Netzknoten der mehreren Netzknoten, sodass mehrere Knotenspannungen erfasst werden, wobei
   - jedem Netzanschlusspunkt bzw. Netzknoten ein Ort in der Netztopologie zugeordnet ist, der als Knotenort bezeichnet wird, und
   - die erfasste Knotenspannung durch einen Knotenphasenwinkel als Phasenwinkel der Knotenspannung gekennzeichnet ist,
- wenigstens eine Zuordnungseinrichtung vorbereitet zum Zuordnen eines zugehörigen Knotenorts zu jeder Knotenspannung, und
- eine zentrale Auswerteeinrichtung vorbereitet zum Ermitteln über die Netztopologie verteilter Netzzustände aus den erfassten Knotenspannungen, insbesondere Knotenphasenwinkeln, jeweils mit jeweils zugeordnetem Knotenort.

Die Erfassungseinrichtungen sind über das elektrische Versorgungsnetz bzw. über die Netztopologie verteilt. Sie können durch Erfassungseinrichtungen von Windenergieanlagen oder Windparks, insbesondere durch Erfassungseinrichtungen der umrichtergeführten Einspeiseeinheiten realisiert sein. Besonders können sie jeweils eine Spannung an dem Netzanschlusspunkt messen. Diese Spannung bildet die Knotenspannung. Sie kann unmittelbar gemessen werden, oder sie kann bspw. dadurch erfasst werden, dass auf einer Niederspannungsseite eines Transformators am Netzanschlusspunkt gemessen wird und die Knotenspannung als Spannung auf der Hochspannungsseite des Transformators berechnet wird.

Jedenfalls ist die Erfassungseinrichtung zu einem solchen Erfassen der Knotenspannung vorbereitet. Sie ist also programmiert und wenn sie in Betrieb genommen wird, führt sie dieses Erfassen auch durch. Ebenfalls ist sie zum Erfassen eines Knotenphasenwinkels vorbereitet. Das bedeutet besonders, dass die Knotenspannung ausreichend genau erfasst wird, nämlich so, dass entweder der Knotenphasenwinkel unmittelbar mittels einer Messeinrichtung erfasst wird oder dass das sinusförmige Spannungssignal in einer so genauen und hohen Auflösung und ausreichend hohen Abtastung erfasst wird, dass sich daraus ein Phasenwinkel ableiten lässt. Dazu kann eine entsprechende Recheneinheit Teil der Erfassungseinrichtung sein und die Ermittlung eines Knotenphasenwinkels aus einem erfassten sinusförmigen Spannungssignal implementiert sein.

Optional ist eine Winkelbestimmungseinrichtung vorgesehen, die vorbereitet ist zum Erfassen eines Knotenphasenwinkels als Phasenwinkel der erfassten Knotenspannung. Diese ist somit dann vorgesehen, wenn Knotenphasenwinkel erfasst werden. Sie kann eine einzelne sein, die zentral angeordnet ist oder bei jeder Erfassungseinrichtung kann eine Winkelbestimmungseinrichtung vorhanden sein. Wenn sie an der Erfassungseinreichung vorhanden ist, kann sie einen Teil dieser Erfassungseinrichtung bilden und durch eine entsprechend implementierte Berechnungsvorschrift realisiert sein.

Es kommt aber auch in Betracht, dass die Knotenspannung jeweils an eine zentrale Stelle zusammen mit einem hochgenauen Zeitsignal übermittelt wird. Es wird dann also besonders ein entsprechendes sinusförmiges Signal der Spannung übermittelt und an zentraler Stelle kann dann zu jeder Knotenspannung der Knotenphasenwinkel erfasst werden, falls er überhaupt erfasst wird.

Eine Zuordnungseinrichtung ist vorgesehen, die dazu vorbereitet ist, einen zugehörigen Knotenort jeder Knotenspannung zuzuordnen. Dazu kann die Zuordnungseinrichtung bei der Erfassungseinrichtung angeordnet sein oder einen Teil der Erfassungseinrichtung bilden. Sie kann dort der Knotenspannung und insbesondere auch dem Knotenphasenwinkel in einem Datenpaket eine Kennung zuordnen. Die Kennung kann bspw. eine Nummer aus einer Durchnummerierung der Knotenorte sein. Die Kennung kann auch die umrichtergeführte Einspeiseeinheit kennzeichnen, die die Knotenspannung erfasst hat, um dadurch eine Zuordnung zu erreichen.

Die Zuordnungseinrichtung kann aber auch an einer zentralen Stelle angeordnet sein. Dazu kann jede Erfassungseinrichtung die Knotenspannung und die Knotenphasenwinkel übertragen, nämlich an die Zuordnungseinrichtung oder eine zentrale Empfangseinrichtung, bei der die Zuordnungseinrichtung angeordnet ist. Beim Empfangen der Knotenspannung und des Knotenphasenwinkels ist dabei die Quelle, also der Absender, also die konkrete Erfassungseinrichtung, die diese Daten versendet hat, bekannt und davon abhängig kann dann die Zuordnungseinrichtung den zugehörigen Knotenort der so empfangenen Knotenspannung und den so empfangenen Knotenphasenwinkel zuordnen. Die Zuordnungseinrichtung kann dafür ein entsprechendes Zuordnungsprogramm aufweisen, das implementiert ist. Insbesondere ist die Zuordnungseinrichtung so vorbereitet, dass sie diese Zuordnung vornimmt, sobald sie in Betrieb genommen wird und die Knotenspannung empfängt.

Die zentrale Auswerteeinrichtung kann bspw. an einer Leitzentrale angeordnet sein, oder in einem zentralen Parkrechner eines ausgewählten Windparks. Sie kann die Knotenspannungen und Knotenphasenwinkel aller Erfassungseinrichtungen empfangen und daraus die über die Netztopologie verteilten Netzzustände ermitteln. Auch diese Funktionalität kann in der Auswerteeinrichtung implementiert sein. Die Funktionalität umfasst die Berücksichtigung der zugeordneten Knotenorte.

Die Zuordnungseinrichtung kann Teil der Zentralauswertungseinrichtung sein, oder mit ihr verknüpft sein.

Die Überwachungsanordnung weist somit insbesondere die zentrale Auswerteeinrichtung auf, die mit den Erfassungseinrichtungen vernetzt ist. Die Winkelbestimmungseinrichtung kann bei der zentralen Auswerteeinrichtung vorgesehen sein, oder es kann jeweils eine Winkelbestimmungseinrichtung an jeder Erfassungseinrichtung vorgesehen sein. In jedem Fall ist die wenigstens eine Winkelbestimmungseinrichtung ebenfalls Teil der Vernetzung. Auch die Zuordnungseinrichtung kann zentral bei oder in der Auswerteeinrichtung vorgesehen sein, oder es können viele Zuordnungseinrichtungen vorgesehen sein, sodass jeweils eine Zuordnungseinrichtung an einer Erfassungseinrichtung vorgesehen ist, oder einen Teil davon bildet. In jedem Fall ist die wenigstens eine Zuordnungseinrichtung auch Teil der Vernetzung.

Gemäß einem Aspekt wird somit vorgeschlagen, dass von der Überwachungsanordnung wenigstens eine Winkelbestimmungseinrichtung umfasst ist, vorbereitet zum Erfassen eines Knotenphasenwinkels als Phasenwinkel der erfassten Knotenspannung.

Insbesondere wird vorgeschlagen, dass die Überwachungsanordnung dazu vorbereitet ist, ein Verfahren zum Überwachen gemäß wenigstens einer vorstehend beschriebenen Ausführungsform durchzuführen. Dazu können entsprechende Funktionalitäten auf den Erfassungseinrichtungen, derwenigstens einen Winkelbestimmungseinrichtung, derwenigstens einen Zuordnungseinrichtung und/oder der zentralen Auswerteeinrichtung implementiert sein. Insbesondere sind zentrale Funktionen, wie das Bestimmen der Netzzustände und - funktion, die mehrere Knotenspannungen bzw. Knotenphasenwinkel berücksichtigen, in der Zentralauswerteeinrichtung implementiert.

Funktionalitäten wie das Berücksichtigen oder Zuordnen eines Zeitsignals können in jeder Erfassungseinrichtung implementiert sein. Dazu kann jede Erfassungseinrichtung eine hochgenaue Zeiteinrichtung, insbesondere Uhr, aufweisen und/oder einen Empfänger für ein gemeinsames Zeitsignal, insbesondere einen GPS-Empfänger.

Die Erfindung wird nachfolgend anhand von Ausführungsformen unter Bezugnahme auf die begleitenden Figuren beispielhaft näher erläutert.
- Figur 1: zeigt eine Windenergieanlage in einer perspektivischen Darstellung.
- Figur 2: zeigt einen Windpark in einer schematischen Darstellung.
- Figur 3: zeigt in drei Teildarstellungen A, B und C veranschaulichend für vier Beobachtungsknoten vier Knotenphasenwinkel und was daraus ableitbar sein kann.
- Figur 4: zeigt ein Strukturschema zum Erläutern des Verfahrens.
- Figur 5: zeigt einen Abschnitt eines elektrischen Versorgungsnetzes in einer vereinfachten und illustrativen Darstellung.

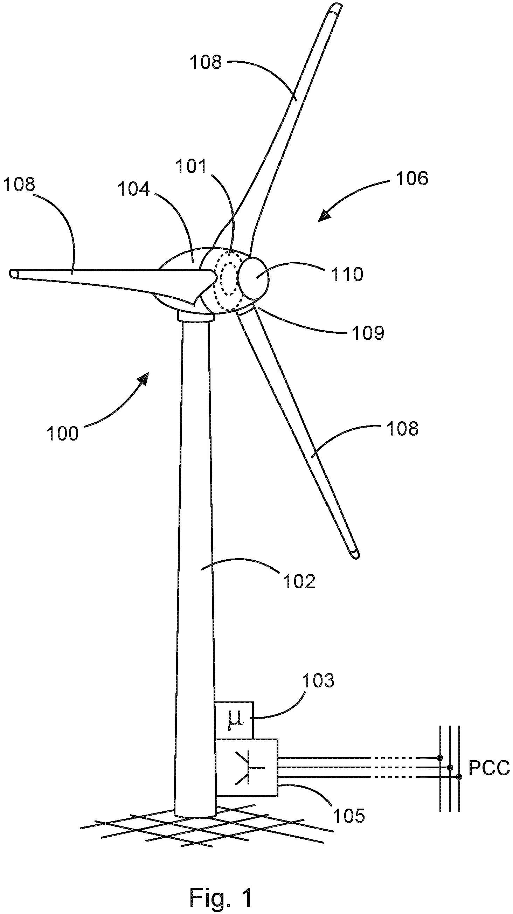

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten. Die Einspeiseeinheit 105 kann eine Erfassungseinrichtung bilden bzw. umfassen.

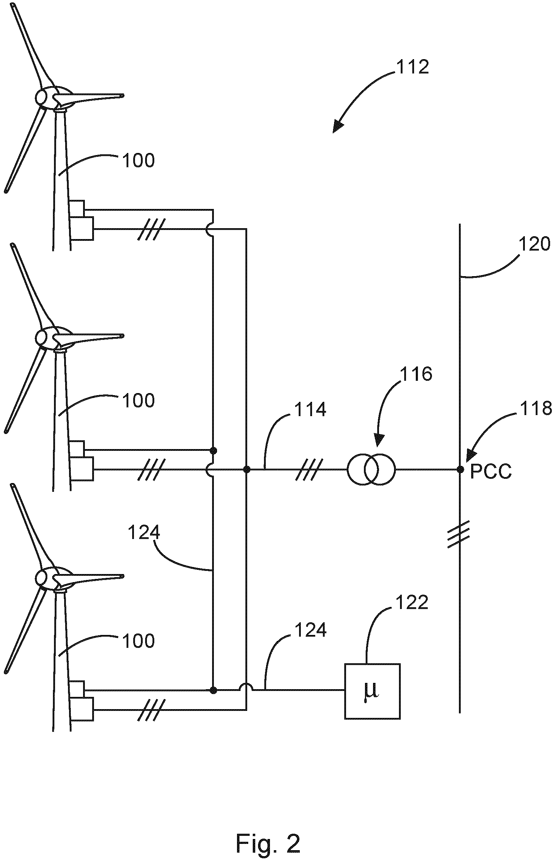

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen. Der zentrale Parkrechner kann eine Auswerteeinrichtung bilden oder umfassen.

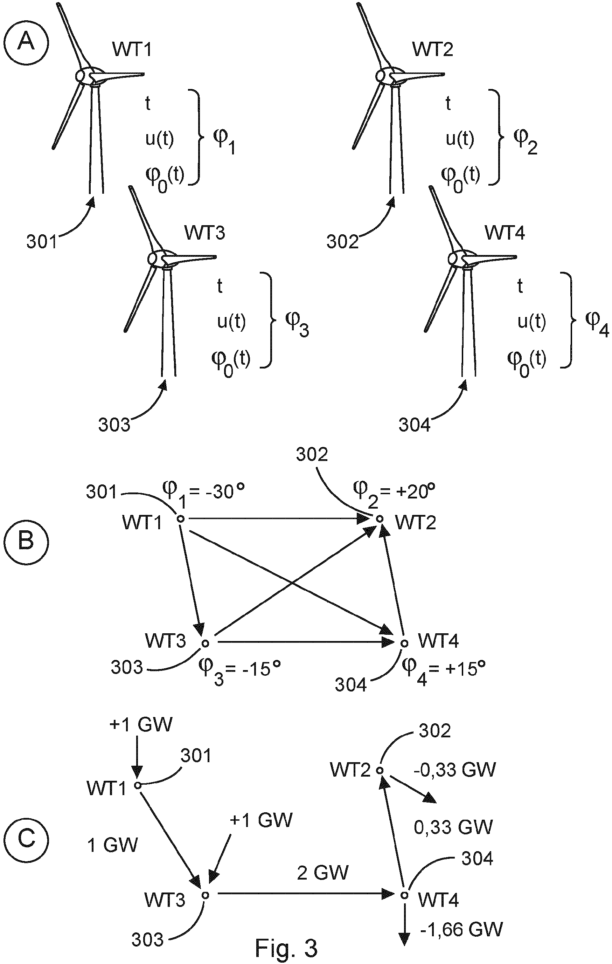

Figur 3 zeigt in den drei Teildarstellungen A, B und C jeweils dieselbe Anordnung von vier exemplarischen Beobachtungsknoten 301 bis 304. In dem Beispiel bildet jeder dieser Beobachtungsknoten 301 bis 304 einen Netzanschlusspunkt einer Windenergieanlage. Die Windenergieanlagen sind jeweils als WT1 bis WT4 gekennzeichnet. Jede Windenergieanlage, die auch repräsentativ für einen Windpark stehen kann, erfasst die Zeit t in hochgenauer Auflösung. Außerdem wird ständig die Spannung u(t) gemessen. Außerdem wird ein Referenzphasenwinkel ϕ₀(t) erfasst. Die Erfassung dieses Referenzphasenwinkels ϕ₀(t) ist an allen Beobachtungsknoten 301 bis 304 und damit an jeder der Windturbinen bzw. Windenergieanlagen WT1 bis WT4 gleich. Die erfasste Spannung u(t) weist einen umlaufenden Phasenwinkel auf und der Referenzphasenwinkel ϕ₀(t) läuft ebenfalls um. Daraus ist ein fester Knotenphasenwinkel ϕ₁ bis ϕ₄ erfassbar. Die Knotenphasenwinkel ϕ₁ bis ϕ₄ bilden also die Knotenphasenwinkel des entsprechenden Beobachtungsknotens 301 bis 304. Somit lässt sich jeweils einer der Knotenphasenwinkel ϕ₁ bis ϕ₄ aus den erfassten Variablen t, u(t) und ϕ₀(t) bestimmen. Das ist in dem ersten Teil A der Figur 3 für jede der vier Windenergieanlagen WT1 bis WT4 veranschaulicht.

In dem zweiten Abschnitt B der Figur 3 wurden beispielhaft vier Werte für die Knotenphasenwinkel angenommen, nämlich ϕ₁ = -30°, ϕ₂ = +20°, ϕ₃ = -15° und ϕ₄ = +15°. Für die theoretische Annahme, dass alle diese Beobachtungsknoten 301 bis 304 miteinander verbunden sind, ergäbe sich jeweils ein direkter Leistungsfluss von einem Beobachtungsknoten zu allen übrigen Beobachtungsknoten, die einen größeren Knotenphasenwinkel aufweisen. Das ist mit den entsprechenden Pfeilen in dem zweiten Abschnitt B angedeutet.

Der dritte Teil C der Figur 3 zeigt nun Leistungsflüsse für die Annahme, dass nicht alle Beobachtungsknoten 301 bis 304 miteinander verbunden sind. Hier wird davon ausgegangen, dass es nur eine Verbindung zwischen den Beobachtungsknoten 301 und 303, 303 und 304 sowie 304 und 302 gibt. Unter der Annahme jeweils vorhandener Verbindungsleitungen gleicher Impedanz ergibt sich in dem gezeigten Beispiel, dass ein Unterschied zweier Knotenphasenwinkel in Höhe von 15° zu einer Leistungsübertragung von 1 GW führt.

Entsprechend gibt es einen Leistungsfluss von 1 GW von dem Beobachtungsknoten 301 zum Beobachtungsknoten 303. In dem Beobachtungsknoten 303 kann also 1 GW eingespeist werden und diese Leistung fließt zum Beobachtungsknoten 303.

Am Beobachtungsknoten 303 wird ebenfalls eine Leistung von 1 GW eingespeist und kommt somit zu der Leistung hinzu, die der Beobachtungsknoten 303 bereits von dem Beobachtungsknoten 301 erhalten hat. Diese 2 GW fließen dann von dem Beobachtungsknoten 303 zum Beobachtungsknoten 304. Entsprechend ergibt sich auf dieser Verbindung ein Unterschied der Knotenphasenwinkel von 30°, nämlich von ϕ₃ = -15° bis ϕ₄= +15°.

An dem Beobachtungsknoten 304 wird somit angenommen, dass 1,6 GW abgeführt, also verbraucht werden, was durch -1,66 GW an dem Beobachtungsknoten 304 gekennzeichnet ist.

Der verbleibende 1/3 GW fließt dann von dem Beobachtungsknoten 304 zum Beobachtungsknoten 302. Am Beobachtungsknoten 302 wird somit noch 1/3 GW verbraucht, was durch -0,33 GW gekennzeichnet ist. Entsprechend ergibt sich als Differenz zwischen den beiden Knotenphasenwinkeln ϕ₄ und ϕ₂ nur ein Wert von 5°. Der Knotenphasenwinkel ϕ₄ beträgt also 15° und der Knotenphasenwinkel ϕ₂ 20°.

Die Darstellung ist natürlich eine Vereinfachung und besonders sollte möglichst keine der Windenergieanlagen WT1 bis WT4 Leistung aufnehmen. Die Windenergieanlagen WT1 bis WT4, die somit synonym auch als Windturbinen bezeichnet werden können, sind deswegen eingezeichnet, weil sie zum Erfassen der zum ersten Teil A erläuterten Größen verwendet werden. Beispielsweise kommt in Betracht, dass in der Nähe der beiden Beobachtungsknoten 302 und 304 jeweils entsprechende Verbraucher angeschlossen sind und betrieben werden, die jeweils die dargestellte abgegebene Leistung verbrauchen, gegebenenfalls zusätzlich zu der Leistung, die die jeweilige Windenergieanlage an dem Beobachtungsknoten selbst auch noch erzeugt.

Somit wurde erkannt, dass nun aufgrund der erfassten Knotenphasenwinkel ϕ₁ bis ϕ₄ ein konkreter Lastfluss abgeleitet werden kann. Veränderungen des Netzabschnitts, der hier durch die drei Übertragungsleitungen veranschaulicht ist, können zu Veränderungen der Beziehung der vier illustrierten Knotenphasenwinkel untereinander führen, also hier insbesondere zu einer Veränderung der jeweiligen Differenzen zweier benachbarter Knotenphasenwinkel. Ergeben sich also solche Veränderungen dieser Phasenwinkelbeziehungen, so lässt dies einen Rückschluss auf Veränderungen des Netzabschnitts zu.

Eine Veränderung könnte beispielsweise sein, dass der erste Knotenphasenwinkel ϕ₁ von -30° auf-15° ansteigt. Wenn die übrigen Knotenphasenwinkel ϕ₂ bis ϕ₄ unverändert bleiben und damit auch ihre Verhältnisse untereinander, ließe sich daraus ableiten, dass zwischen den Beobachtungsknoten 301 und 303 keine Leistung mehr fließt. In dem Beobachtungsknoten 303 würde somit die eingespeiste Leistung um 1 GW angestiegen sein, denn die Beziehung der Knotenphasenwinkel ϕ₃ und ϕ₄ der Beobachtungsknoten 303 und 304 hat sich nicht verändert, sodass also weiterhin 2 GW von dem Beobachtungsknoten 303 zum Beobachtungsknoten 304 fließen.

Je nachdem, wie schnell sich die Beziehung zwischen den beiden Knotenphasenwinkeln ϕ₁ und ϕ₃ verändert hat, sind Rückschlüsse auf die Art eines Fehlers möglich. Ist der Knotenphasenwinkel ϕ₁ allmählich angestiegen, so wurde an dem Beobachtungsknoten 301 die eingespeiste Leistung heruntergefahren. Ist er sprunghaft angestiegen, so ist möglicherweise ein großer Erzeuger vom Netz getrennt worden.

Vorsorglich wird darauf hingewiesen, dass eine Windenergieanlage derzeit nicht in der Lage ist, eine Leistung von 1 GW zu erzeugen. Dafür bedürfte es zumindest eines ausgesprochen großen Windparks. Auch insoweit soll Figur 3 nur veranschaulichen, dass die Windenergieanlagen Messungen vornehmen können. Die vorstehend genannte beispielhafte Abschaltung eines großen Erzeugers kann also bedeuten, dass an dem Beobachtungsknoten 301 die Windenergieanlage WT1 angeordnet ist und, zumindest in seiner Nähe, ebenfalls ein großer Erzeuger dort angeschlossen ist und zumindest anfangs eingespeist hat. Die Windenergieanlage kann also auch nach der Trennung des Erzeugers weitermessen. Im Übrigen könnte sie auch weitermessen, wenn sie selbst vom Netz getrennt wäre oder wenn sie repräsentativ für einen Windpark steht und dieser vom Netz getrennt wäre.

Somit verdeutlicht Figur 3, dass Windenergieanlagen zum Erfassen von Netzzuständen wie Leistungsflüssen verwendet werden können. Sie können über das Netz verteilt sein und dadurch an vielen Stellen die Knotenphasenwinkel aufnehmen. Das muss nicht unbedingt durch Windenergieanlagen ausgeführt werden, Windenergieanlagen dafür zu verwenden, ist aber eine effiziente Lösung.

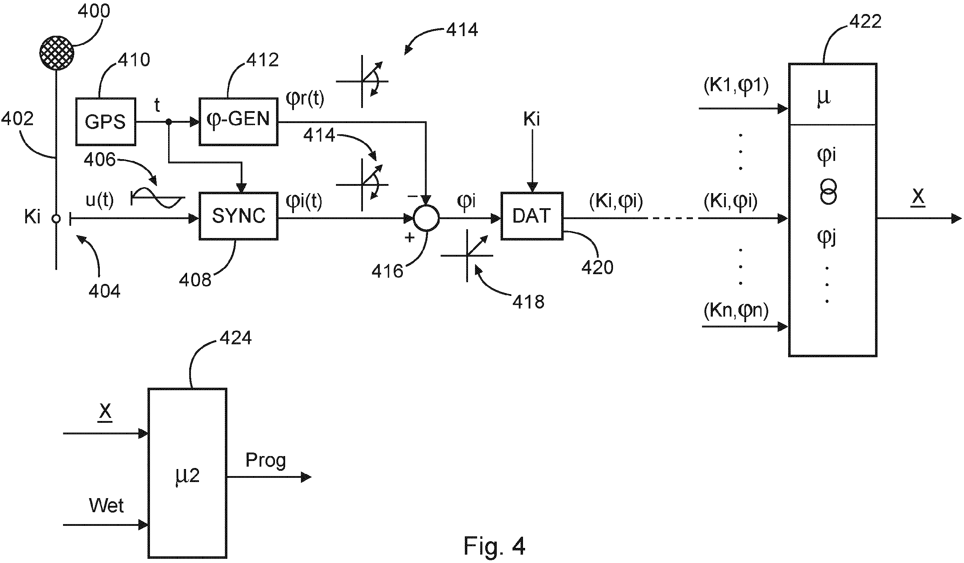

Figur 4 zeigt ein Strukturschema zum Erfassen und Weiterverarbeiten der Knotenphasenwinkel. Dazu ist zu Beginn, nämlich oben links in der Figur 4 ein elektrisches Versorgungsnetz 400 angedeutet mit einer beispielhaften Übertragungsleitung 402 und einem beispielhaften Netzknoten Ki. Das ist also der i-te-Netzknoten, der betrachtet wird. An dem Netzknoten Ki ist auch ein Spannungsmessaufnehmer 404 angedeutet, sodass dieser Netzknoten Ki auch einen Knotenort darstellt. Alle in diesem Beispiel beschriebenen Netzknoten sind auch Knotenorte, sodass Ki auch für einen Knotenort steht.

An diesem Knotenort Ki wird somit eine Netzspannung u(t) als Zeitsignal erfasst. Ein elektrisches Versorgungsnetz arbeitet üblicherweise dreiphasig, der Einfachheit halber wird hier aber nur eine Phase betrachtet und dargestellt. Jedenfalls veranschaulicht ein Spannungssignalsymbol 406, dass an dem Knotenort Ki ein Spannungszeitsignal erfasst wurde. Dieses Spannungszeitsignal wird in einen Synchronisationsblock 408 eingegeben. Der Synchronisationsblock 408 erhält ein genaues Zeitsignal t von einem entsprechenden Signalblock 410. Der Signalblock 410 kann Teil eines globalen Positionssystems GPS sein, was in dem Block angedeutet ist, es kann aber auch anderweitig ausgeführt sein.

Dasselbe hochgenaue Zeitsignal t erhält auch ein Referenzsignalgenerator 412. Dieser Referenzsignalgenerator 412 erzeugt somit ein Referenzsignal, nämlich einen Referenzphasenwinkel ϕr(t). Dieses Signal wird somit von dem Referenzsignalgenerator 412 ausgegeben und dieser Referenzphasenwinkel ϕr(t) bildet somit einen umlaufenden Phasenwinkel. Das wird durch das dynamische Phasenwinkelsymbol 414 veranschaulicht.

Der Synchronisationsblock 408 gibt hingegen den am Knotenort Ki erfassten Phasenwinkel ϕi(t) aus, der ebenfalls einen umlaufenden Phasenwinkel bildet und damit ebenfalls durch ein dynamisches Phasenwinkelsymbol 414 veranschaulicht werden kann. Der Referenzphasenwinkel ϕr(t) und der Phasenwinkel ϕi(t) des Knotenorts Ki sind nicht unbedingt gleich, können aberdurch dasselbe dynamische Phasenwinkelsymbol 414 veranschaulicht werden.

Beide Phasenwinkel ϕr(t) und ϕi(t) laufen allerdings mit Netzfrequenz um. Sie laufen also synchron um, solange es einen stationären oder quasistationären Zustand gibt. Sie unterscheiden sich dann allenfalls um einen Knotenphasenwinkel ϕi. Dieser Knotenphasenwinkel ϕi ergibt sich somit als Differenz zwischen dem Phasenwinkel ϕi(t) und dem Referenzphasenwinkel ϕr(t), und diese Differenz wird an der Summierstelle 416 gebildet. Das Ergebnis ist somit der Knotenphasenwinkel ϕi, der nicht mit der Netzfrequenz umläuft, sondern einen festen Wert bildet, solange sich das System in einem stationären oder quasistationären Zustand befindet. Das ist durch das statische Phasenwinkelsymbol 418 angedeutet.

Zur weiteren Verarbeitung wird dem Knotenphasenwinkel ϕi der zugehörige Knotenort Ki zugeordnet. Das wird durch den Datenblock 420 symbolisiert, in dem diese beiden Werte zu einem Datenpaket kombiniert werden. Das Ergebnis ist somit ein entsprechendes Datenpaket, was hier als (Ki, ϕi) dargestellt ist.

Dieses Datenpaket (Ki, ϕi) wird dann zur weiteren Verarbeitung an eine zentrale Auswerteeinrichtung 422 übergeben. Diese zentrale Auswerteeinrichtung 422 kann von den übrigen erläuterten Elementen weit entfernt angeordnet sein. Sie kann zudem Datenpakete (K1, ϕ1) - (Kn, ϕn) von Knotenorten des gesamten elektrischen Versorgungsnetzes oder zumindest des betrachteten Netzabschnitts empfangen.

In der zentralen Auswerteeinrichtung 422 können diverse Berechnungen durchgeführt werden, insbesondere können diverse Vergleiche zwischen Knotenphasenwinkeln ϕi und ϕj unterschiedlicher Knotenorte angestellt werden. Insbesondere Differenzbildungen zwischen jeweils zweier solcher Knotenphasenwinkel können durchgeführt werden.

Es kommen weitere Auswertungen hinzu, wie die Erfassung zeitlicher Veränderungen sowohl der Knotenphasenwinkel selbst als auch zeitliche Veränderungen der Beziehungen von Knotenphasenwinkeln untereinander, also bspw. eine zeitliche Veränderung einer Differenz zweier Knotenphasenwinkel. Daraus können über die Netztopologie verteilte Netzzustände ermittelt werden und das ist durch den Zustandsvektor x veranschaulicht.

Im Übrigen kann der Synchronisationsblock 408 als Winkelbestimmungseinrichtung angesehen sein, oder eine solche beinhalten, denn er bestimmt aus dem Zeitsignal den zugeordneten Phasenwinkel ϕi(t). Der Datenblock 420 kann als Zuordnungseinrichtung ausgebildet sein bzw. eine solche enthalten oder symbolisch für eine solche stehen. In dem Datenblock 420 erfolgt nämlich eine solche Zuordnung eines zugehörigen Knotenorts zu der Knotenspannung. Hier erfolgt die Zuordnung zu der Knotenspannung dadurch, dass sie dem Knotenphasenwinkel zugeordnet wird. Es kann auch eingangs eine Zuordnung des Knotenorts zu dem noch unausgewerteten Spannungssignal erfolgen. Die beschriebenen Bearbeitungsschritte ändern die Zuordnung nicht.

In einem unteren Teil der Figur 4 veranschaulicht das Strukturschema auch noch die Möglichkeit, aus den Netzzuständen x zusammen mit Daten einer Wettervorhersage, eine Prognose für das elektrische Versorgungsnetz zu erstellen. Insbesondere kann eine zeit- und ortsabhängige Leistungsprognose erstellt werden. Es kommt aber auch eine Prognose über eine zu erwartende lokale Netzauslastung und/oder einen zu erwartenden Übertragungsengpass in der Netztopologie in Betracht.

Dafür werden die Netzzustände x und die Wettervorhersagedaten Wet in den Prognoseblock 424 eingegeben. Das Ergebnis, das der Prognoseblock 424 somit ausgibt, sind Daten einer Prognose Prog.

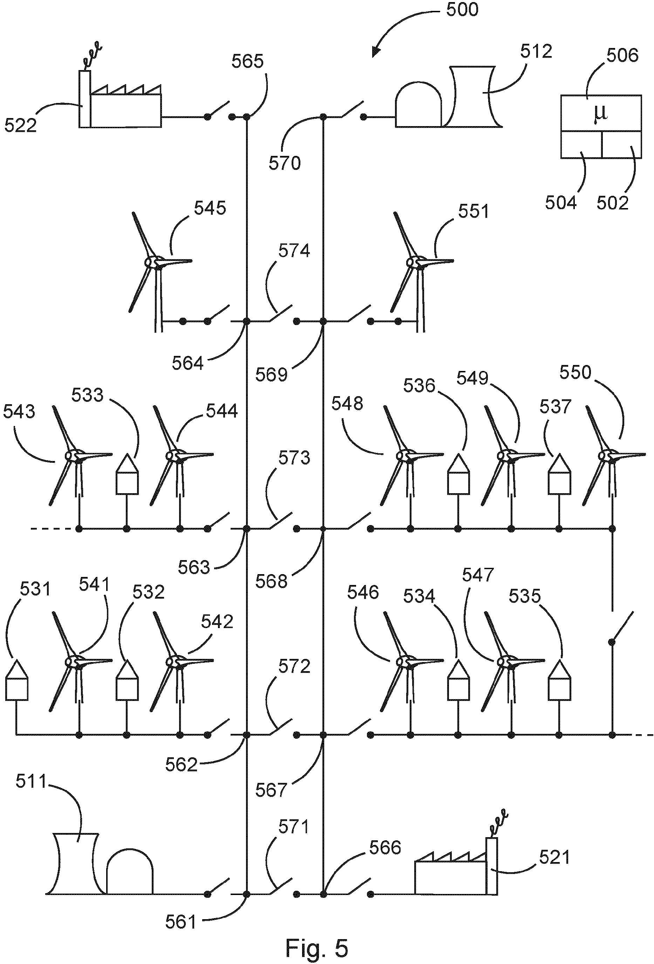

Figur 5 veranschaulicht einen Netzabschnitt 500 eines elektrischen Versorgungsnetzes. Zur Überwachung sind eine Auswerteeinrichtung 502 und eine Prüfeinrichtung 504 vorgesehen, die in einer zentralen Leitstelle 506 angeordnet sind.

Figur 5 zeigt sehr schematisch einige Elemente, nämlich ein erstes und zweites Kraftwerk 511 und 512, einen ersten und zweiten industriellen Verbraucher 521 und 522, sieben weitere Verbraucher 531 bis 537 und elf Windenergieanlagen 541 bis 551. Die sieben weiteren Verbraucher 531 bis 537 sind vereinfachend jeweils als ein Haus dargestellt, sie können somit für eine Ortschaft stehen, aber auch für andere Verbraucher, wie beispielsweise eine Elektrotankstelle. Die Windenergieanlagen 541 bis 551 können auch unterschiedlich sein, sie können teilweise einzelne Windenergieanlagen bilden und teilweise repräsentativ für Windparks stehen. Sie können auch alle jeweils für einen Windpark stehen.

Wichtig ist aber, dass jede dieser Windenergieanlagen 541 bis 551 (oder der Windpark) als Messaufnehmer dienen und damit der jeweilige Netzanschlusspunkt, an den sie einspeisen, der der Einfachheit halber in Figur 5 aber nicht eingezeichnet ist, somit jeweils einen Beobachtungsknoten bildet. Der veranschaulichte Netzabschnitt 500 weist somit elf Beobachtungsknoten auf, die hier der Einfachheit halber mit den elf Windenergieanlagen 541 bis 551 gleichgesetzt sind.

Der Netzabschnitt 500 weist zudem diverse Knotenpunkte auf, die jeweils, sofern sie nicht zu einem Schalter gehören, einen Netzknoten bilden, von denen der besseren Übersichtlichkeit halber nur zehn Netzknoten 561 bis 570 durchnummeriert sind. Außerdem sind diverse Trennschalter eingezeichnet, die im Normalfall geschlossen sind und nur der besseren Übersichtlichkeit halber in Figur 5 alle geöffnet dargestellt sind. Der besseren Übersichtlichkeit halber sind nur vier Netztrennschalter 571 bis 574 durchnummeriert.

Auch ansonsten sind die Netztrennschalter nur veranschaulichend dargestellt. So sind besonders die genannten Netztrennschalter 571 bis 574 jeweils in der Mitte zweier Übertragungsleitungen dargestellt. Der Netztrennschalter 571 ist also beispielsweise auf einer Übertragungsleitung zwischen den beiden Netzknoten 561 und 566 dargestellt. Normalerweise würde natürlich jeweils ein Netztrennschalter an jedem Netzknoten angeordnet sein.

Es sind auch diverse Übertragungsleitungen dargestellt, nämlich insbesondere jeweils eine zwischen zwei Netzknoten und auch jeweils eine zwischen einem Netzknoten und einem Erzeuger oder Verbraucher, oder zwischen einem Verbraucher und einem Erzeuger. Diese Netzabschnitte sind der besseren Übersichtlichkeit halber nicht mit Bezugszeichen versehen.

Die Windenergieanlagen 541 bis 551 können somit an ihrem jeweiligen Beobachtungsknoten Messwerte erfassen, insbesondere die, die auch in dem ersten Abschnitt der Figur 3 jeweils veranschaulicht wurden. Als Ergebnis können sie jeweils für ihren Beobachtungsknoten einen Knotenphasenwinkel ϕ₁ bis ϕ₁₁ ausgeben und an die zentrale Leitstelle 506 übertragen. Übertragungsleitungen für Daten sind der Einfachheit halber nicht dargestellt. Insbesondere kann aber jede Windenergieanlage bzw. der Windpark, für den sie repräsentativ steht, bidirektional mit der zentralen Leitstelle 506 kommunizieren.

Anhand von Figur 5 sollen unterschiedliche Netzstörungen veranschaulicht werden, und welche Folgen dies haben kann. Beispielsweise könnten im Normalfall auch die beiden Kraftwerke 511 und 512 viel Leistung einspeisen und die beiden industriellen Verbraucher 521 und 522 viel Leistung verbrauchen. In einem solchen Zustand fließt viel Leistung vom ersten Kraftwerk 511 zum ersten industriellen Verbraucher 521 und vom zweiten Kraftwerk 512 zum zweiten industriellen Verbraucher 522.

Tritt nun eine Störung im ersten industriellen Verbraucher 521 auf, so kommt in Betracht, dass der Netztrennschalter zwischen dem Knoten 566 und dem ersten industriellen Verbraucher 521 geöffnet wird. Das führt zu einem Phasensprung an dem Knoten 566 und dieser kann am stärksten von der Windenergieanlage 546, also dem dort zugeordneten Beobachtungsknoten, erfasst werden. Etwas später wird sich dieser Phasensprung auch weiter ausweiten und dann als Nächstes bei den Windenergieanlagen 542, 548 und 547 bemerkbar sein bzw. ihren jeweils zugeordneten Beobachtungsknoten, was nachfolgend nicht jedes Mal wiederholt wird. Noch etwas später kann sich diese Veränderung beispielsweise an den Windenergieanlagen 541, 544, 551 und 549 bemerkbar machen. Somit geht eine entsprechende Welle eines Phasenwinkelsprungs, der in größerer Entfernung von dem Knoten 566 möglicherweise weniger sprungförmig verläuft, durch das Netz bzw. den gezeigten Netzabschnitt 500.

Dadurch, dass nun genau erkannt wurde, wann welche Windenergieanlage was für einen Phasenwinkelsprung oder was für eine Phasenwinkelveränderung beobachtet, kann aus dieser Wellenbewegung auf den Ort und die Tatsache einer Trennung des industriellen Verbrauchers 521 zurückgeschlossen werden.

Je nach Größe der so erkannten Störung können besonders die in der Nähe stehenden Windenergieanlagen veranlasst werden, weniger Leistung einzuspeisen, denn durch die Trennung des industriellen Verbrauchers 521 wird weniger Leistung verbraucht und damit weniger benötigt. Neben dem Phasenwinkelsprung liegt in dem Moment somit auch ein Leistungsüberangebot vor, was durch diesen Phasenwinkelsprung erkannt werden konnte. Dadurch wird natürlich auch die Richtung des Phasenwinkelsprungs ausgewertet. Zu Aussagen, die aus der entsprechenden Richtung gezogen werden können, wird auf die Erläuterung zu Figur 3 verwiesen.

Nachfolgend wird eine weitere Störung anschaulich beschrieben, die sich möglicherweise auch infolge der Abtrennung des industriellen Verbrauchers 521 ergeben kann. Hierbei könnte ein Großteil der von dem ersten Kraftwerk 511 eingespeisten Leistung nun ein neues Ziel suchen und damit in dem Netzabschnitt 500 letztlich auch in Richtung zum zweiten Großkraftwerk 512 fließen. Das kann dazu führen, dass die Leistungseinspeisung des Großkraftwerks 512 zurückgeht. Dann wird aber recht schnell zu viel Leistung in dem Großkraftwerk 512 zur Verfügung stehen, die dann eingespeist wird und dann wie eine Welle zurück in Richtung zum ersten Großkraftwerk 511 fließen könnte.

All das ist eine sehr veranschaulichende Darstellung, aber es kommt jedenfalls in Betracht, dass sich eine Leistungspendelung zwischen den beiden Großkraftwerken 511 und 512 ergibt. Um dem entgegenzuwirken, könnten beispielsweise einige Windenergieanlagen, zum Beispiel insbesondere die Windenergieanlagen 551 in der Nähe des zweiten Großkraftwerks und 542 in der Nähe des ersten Großkraftwerks quasi antizyklisch ihre Leistungseinspeisung verringern oder erhöhen.

Es kommt aber auch beispielsweise eine Topologieumschaltung in Betracht. Besonders kann über Öffnen oder Schließen jeweils eines der Netztrennschalter 571 bis 574 eine Umleitung des Leistungsflusses in Betracht kommen.

Eine weitere mögliche Störung ist ein kaskadiertes Trennen. Das kaskadierte Trennen könnte auch mit dem bereits geschilderten Trennen des industriellen Verbrauchers 521 beginnen. Eine Konsequenz könnte sein, dass - auch das ist besonders zum Zwecke der Veranschaulichung geschildert, das erste Großkraftwerk 511 vom Netz getrennt wird. Der Grund könnte eine resultierende Überspannung sein, oder eine Überhöhung des eingespeisten Stroms aufgrund der bereits beschriebenen Leistungspendelung. Der Grund kann aber auch eine manuelle Trennung dieses ersten Großkraftwerks 511 von einer Leitzentrale sein.

Wird ein Großteil der erzeugten Leistung bzw. wurde ein Großteil der erzeugten Leistung des Großkraftwerks 511 für den ersten industriellen Verbraucher 521 benötigt, und trennt sich dieser industrielle Verbraucher 521 vom Netz, ist in der Konsequenz die von dem ersten Großkraftwerk 511 erzeugte Leistung im Wesentlichen zu viel im Netz, was eine manuelle Netztrennung veranlassen könnte. Dabei kann dahinstehen, ob eine solche manuelle Trennung ein menschlicher Fehler oder die richtige Entscheidung ist.

Jedenfalls würde eine solche zweite Trennung einen erneuten Phasensprung zur Folge haben, der zuerst an der Windenergieanlage 542 erkannt wird, erst etwas später an den Windenergieanlagen 546 und 544, noch später an weiteren Windenergieanlagen. Somit wurde eine zweite Welle der Knotenphasenwinkel erkannt, die etwas später gestartet ist und einen etwas unterschiedlichen Ursprung hat.

Eine weitere Konsequenz kann sein, dass nach dem Abschalten des Großkraftwerks 511 zu wenig Leistung im Netzabschnitt 500 ist. Speisen dann beispielsweise gerade die beiden Windenergieanlagen 541 und 542 nur sehr wenig Leistung ein, jedenfalls deutlich weniger als die Verbraucher 531 und 532 benötigen, so fließt möglicherweise ein zu hoher Strom an dem Netzknoten 562 in Richtung zu diesen Verbrauchern. Der Netztrennschalter zwischen der Windenergieanlage 542 und dem Netzknoten 562 könnte auslösen.

Es ergebe sich die dritte Trennung, hier die Abtrennung eines Netzabschnitts. Auch das könnte von den weiteren Windenergieanlagen erfasst werden. Von denen noch im Netzabschnitt 500 verbliebenden Windenergieanlagen würde dies möglicherweise zuerst bei den Windenergieanlagen 546 und 544 erkannt werden, bis es sich zu weiteren Windenergieanlagen fortpflanzt.

Auf diese Art und Weise kann ein kaskadiertes Trennen erkannt werden und es können Gegenmaßnahmen eingeleitet werden. Soweit das Trennen gut lokalisiert werden kann, kann auch erkannt werden, welche Leistungszuflüsse oder -abflüsse jeweils abgetrennt wurden und damit kann schnell das Leistungsdefizit oder der Leistungsüberschuss erkannt und durch eine entsprechende Steuerung kompensiert werden. Auch hier kommt insbesondere eine schnelle Leistungsanpassung der Windenergieanlagen in Betracht, denn diese sind sehr schnelle Regelungseinheiten im elektrischen Versorgungsnetz. Für kurzfristige Maßnahmen können diese auch eine signifikante Leistungserhöhung temporär bereitstellen.

Als weitere Störung kann auch das Auftrennen einer Übertragungsleitung erkannt werden. Wird beispielsweise der Netztrennschalter 572 geöffnet, damit also die Übertragungsleitung zwischen den Knoten 562 und 567 geöffnet, so verändert sich das Verhältnis der Knotenphasenwinkel der beiden Windenergieanlagen 542 und 546 zueinander. Andere Windenergieanlagen können auch Auswirkungen erfassen, diese beiden Windenergieanlagen erfassen aber die stärkste Auswirkung und damit kann diese Trennung auch lokalisiert werden.

Ebenso kann auch die Abtrennung eines Teilnetzes erkannt werden, was auch als *System Split* bezeichnet wird. Beispielsweise kann erkannt werden, wenn alle vier Netztrennschalter 571 bis 574 geöffnet sind. Das kann beispielsweise dann erfolgen, wenn aus Wartungsgründen oder wenn aus anderen Gründen eine Übertragungsleitung oder mehrere abgeschaltet werden muss bzw. müssen, nur noch zwei oder vielleicht sogar nur noch einer der genannten vier Netztrennschalter geschlossen ist.

Besonders der gravierende Stromausfall im europäischen Verbundnetz am 4. November 2006 kann hier, vereinfachend, veranschaulicht werden. Es wurde damals zur Auslieferung eines Kreuzfahrtschiffes eine Hochspannungsverbindung mit zwei Übertragungsleitungen abgeschaltet. Das könnten zum Beispiel die Übertragungsleitungen 571 und 572 sein. In dem Fall gab es zudem einen starken Leistungsfluss, der beispielsweise durch einen Leistungsfluss von der "rechten Seite der Figur 5" zur "linken Seite der Figur 5" veranschaulicht werden könnte. Die vier Netztrennschalter 571 bis 574 bilden also die Trennung zwischen diesen beiden Seiten. All die Leistung könnte dann aber noch über die Überragungsleitungen der verbleibenden Netztrennschalter 573 und 574, die geschlossen sein sollten, übertragen werden.

Als Fehler wurde aber übersehen, dass eine dieser beiden Übertragungsleitungen zu Wartungszwecken ebenfalls getrennt war. Das Ergebnis war, dass, wenn beispielsweise der Trennschalter 573 unberücksichtigt geöffnet war, die gesamte Leistung nun über die Übertragungsleitung fließen musste, die den Netztrennschalter 574 aufweist. Das überschritt aber die zulässige Übertragungsleistung und führte dann ebenfalls zu einer Sicherheitsabschaltung. Auch dies ist natürlich sehr vereinfacht dargestellt.

Jedenfalls wird dann der Trennschalter 574 als letzter von den vier genannten geöffnet und das macht sich sofort in den Phasenwinkeln quasi der im rechten Teil verbliebenen Windenergieanlagen einerseits und der im linken Teil verbliebenen Windenergieanlagen andererseits bemerkbar. Es ist dann sofort erkennbar, welches Problem vorliegt.

Aus der Größe der zuvor über die Leitungen übertragenen Leistung ist auch die Größe des durch die Trennung resultierenden Leistungsdefizits der einen Seite und des Leistungsüberschusses der anderen Seite bekannt.

Auch das könnte aus den Knotenphasenwinkeln abgelesen werden, wie in Figur 3 erläutert wurde. Entsprechend könnten besonders die Windenergieanlagen der rechten Seite sofort ihre Leistung reduzieren, um das Leistungsüberangebot dort zu verringern. Andererseits könnte eine Leistungserhöhung zusammen mit dem Herunterfahren oder notfalls Abschalten einiger Verbraucher im linken Teil durchgeführt werden.

Im Übrigen wäre möglicherweise das Ereignis vom 4. November 2006 verhinderbar gewesen, denn bereits der überhöhte Leistungsfluss aufgrund der wegen Wartung abgeschalteten Leistung wäre erkannt worden. Spätestens nach dem Auftrennen wäre die drohende Instabilität erkannt worden. Darauf hätte reagiert werden können, nämlich mit sofortiger Verringerung der Leistungserzeugung "auf der rechten" Seite der Windenergieanlagen. Dann hätte vielleicht die Übertragungsleistung über die verbliebene einzige Übertragungsleitung auf ein zulässiges Maß schnell genug abgesenkt werden können. Tatsächlich ist unmittelbar vordem Ereignis am 4. November 2006 viel Leistung aus Windenergieanlagen übertragen worden. Mit einem entsprechenden Steuerbefehl hätten die betreffenden Windenergieanlagen ihre Leistung sofort reduzieren können.

Wie gesagt, der Vorgang am 4. November 2006 war natürlich deutlich komplexer und wurde hier nur zur besseren Veranschaulichung herangezogen.

Auch eine Topologieumschaltung kann erkannt werden, um ein weiteres Beispiel einer Störung zu nennen. Eine Topologieumschaltung kann eine der genannten Trennungen der Übertragungsleitung sein, also das Auftrennen der Netztrennschalter 571 und 572, eine Topologieumschaltung kann aber auch besonders so gestaltet sein, dass ein Trennschalter geöffnet und ein anderer geschlossen wurde. Beispielsweise könnte der Netztrennschalter 574 geöffnet und der Netztrennschalter 573 geschlossen werden, aus welchen Gründen auch immer.

Dadurch stehen nach wie vor gleich viele Übertragungsleitungen "von der rechten zur linken Seite" zur Verfügung, auch mit gleicher Kapazität, aber die Führung des Leistungsflusses hat sich dennoch geändert. Besonders der Leistungsfluss vom zweiten Großkraftwerk 512 zum zweiten industriellen Verbraucher 522 hat sich geändert. Besonders die Windenergieanlagen 544, 545, 548 und 551 können diese Änderung der Topologie am besten an den erfassten Knotenphasenwinkeln erkennen bzw. die Auswerteeinrichtung 502 kann dies anhand der Knotenphasenwinkel erkennen, die diese vier genannten Windenergieanlagen liefern.

Hier kommt auch in Betracht, dass keine Stützmaßnahme ergriffen werden muss, oder bedingt durch den nun verlängerten Weg des genannten Leistungsflusses könnten Spannungsstützmaßnahmen in Betracht kommen, die einige Windenergieanlagen ausführen können.

Erfindungsgemäß wurde besonders Folgendes erkannt.

In verteilten Drehstromnetzen ergeben sich durch Lastflüsse und dynamische Effekte zwischen den Knoten Phasenverschiebungen in den Knotenspannungen (statisch und dynamisch). Die Verschiebung resultiert vorwiegend durch den Spannungsabfall über die Netzimpedanz (statisch) und ist umso größer, je größer die Netzimpedanz und je größer der Lastfluss über die Netzimpedanz ist. Aber auch Netzpendelungen und Störungen laufen durch das Netz und sind in einer Reaktion der Spannungswinkel an den Netzknoten erkennbar. Insgesamt kann die statische Phasenverschiebung vom Netzschwerpunkt bis zu +/- 90° betragen.

Es wurde auch erkannt, dass ein Betreiber von Windenergieanlagen Zugriff auf tausende Messpunkte der Spannung im Netz haben kann, und damit Zugriff auf deutlich mehr Messpunkte, als die anderen Netzbetreiber haben kann. Eine Idee ist es, die Information der Verteilung der Netzphasenwinkel zur Erkennung dynamischer Netzeffekte und Stabilitätsgrenzen zu nutzen.

Es wurde ein Vorschlag gefunden, dadurch eine Bewertung der Netzstabilität durchzuführen. Eine Erkennung von Leistungspendelungen und auch eine Erkennung von Netzstörungen und Topologieumschaltungen mit einem Einfluss auf die Netzstabilität wird dadurch möglich.

Möglich wird auch eine Erkennung von Netzstörungen und dynamischen Effekten, insbesondere von einem System-Split, einem kaskadierten Trennen von Netzteilen, Erzeugern und Verbrauchern, von einem Ausfall von Leitungen und Verlust der Redundanz und von Kurzschlüssen. Leistungspendelungen können erkannt werden, und eine Stabilitätsbewertung und Aktivierung von Maßnahmen zur Verbesserung der Stabilität durchgeführt werden. Auch eine Erkennung dynamischer Effekte und Reaktion auf diese ist möglich.

Eine Idee ist es, an möglichst allen Windenergieanlagen (oder alternativ an allen Windparks) den Spannungswinkel der Netzspannung zu erfassen und auszuwerten. Folgende Informationen, oder einige davon, sollten dabei vor Ort vorliegen:
Eine hochpräzise Zeitinformation, ein GPS oder anderes Zeitsignal, Referenzwinkel und Referenzzeit, Spannungswinkelinformation (Phasenverschiebung zum Referenzwinkel).

Die Informationen können teilweise aus einer Umrichterregelung (Inverter-Control), aus Grid Data Monitoring Modul (externe oder interne Auswertung), oder aus Messung an einem Parkregler bzw. einer Parksteuereinheit (FCU) erhalten werden.

Ein Vorschlag ist, dass für eine übergreifende Nutzung der gemessene Spannungszeiger mit einem Zeitsignal markiert wird und zentral ausgewertet wird. Dabei müssen Zeitverzögerungen in der Kommunikation zwischen Zeitmodul und Netzmessmodul möglichst klein, oder zumindest immer gleich lang sein.

Es wird vorgeschlagen, dass an einer zentralen Stelle die Winkelinformationen zusammen mit dem Standort ausgewertet werden. Daraus kann ein präzises Bild der relativen Lastflüsse im Netz zwischen den Netzknoten errechnet werden. Durch die optionale Anreicherung mit statischen topologischen Netzinformationen lässt sich in Echtzeit folgendes bestimmen:
Eine Netzgruppenzuordnung einer Windenergieanlage im Verteilnetz (an welchen Übertragungsnetzknoten ist gerade welcher Windpark wirksam angeschlossen). Es lässt sich auch ein aktueller topologischer Aufbau des Netzes bestimmen (Schalterstellungen, Sammelschienenverschaltungen, Abschaltungen von Leitungen).

## Patentansprüche

1. Verfahren zum Überwachen eines elektrischen Versorgungsnetzes (500), wobei
- das elektrische Versorgungsnetz (500)
- eine Netzfrequenz und
- eine Netztopologie mit mehreren Netzknoten (Ki) aufweist,
- mehrere umrichtergeführte Einspeiseeinheiten (100) jeweils über einen Netzanschlusspunkt (118) an das elektrische Versorgungsnetz angeschlossen sind, und
- die Netzanschlusspunkte über die Netztopologie verteilt sind,
umfassend die Schritte
- Erfassen jeweils wenigstens einer Knotenspannung (u(t)) an dem Netzanschlusspunkt oder einem dem Netzanschlusspunkt zugeordneten Netzknoten der mehreren Netzknoten, sodass mehrere Knotenspannungen erfasst werden, wobei
- jedem Netzanschlusspunkt bzw. Netzknoten ein Ort in der Netztopologie zugeordnet ist, der als Knotenort (Ki) bezeichnet wird, und
- die erfasste Knotenspannung durch einen Knotenphasenwinkel als Phasenwinkel der Knotenspannung gekennzeichnet ist,
- Zuordnen eines zugehörigen Knotenorts zu jeder Knotenspannung, und
- Ermitteln über die Netztopologie verteilter Netzzustände aus den erfassten Knotenspannungen, mit jeweils zugeordnetem Knotenort, insbesondere aus den Knotenphasenwinkeln oder Phasenbeziehungen zwischen wenigstens zwei Netzknoten.

2. Verfahren nach Anspruch 1, **dadurch gekennzeichnet, dass**
die ermittelten Netzzustände (x) Zustände gemäß wenigstens einem Listenpunkt umfassen, aus der Liste aufweisend:
- Leistungsflüsse zwischen Netzknoten,
- die Netztopologie bestimmende Schaltzustände,
- Übertragungsengpässe in der Netztopologie,
- einen erneuerbaren Einspeiseanteil,
- einen konventionellen Einspeiseanteil und
- eine Netzlast.

3. Verfahren nach Anspruch 1 oder 2, **dadurch gekennzeichnet, dass**
in Abhängigkeit von den ermittelten verteilten Netzzuständen und optional in Abhängigkeit von wenigstens einer Wettervorhersage wenigstens eine Prognose bestimmt wird zu
- wenigstens einer zu erwartenden lokalen Netzauslastung und/oder
- wenigstens einem zu erwartenden Übertragungsengpass in der Netztopologie.

4. Verfahren nach einem der vorstehenden Ansprüche, **dadurch gekennzeichnet, dass**
- jeder Knotenspannung eine hochgenaue Messzeit zugeordnet wird, die eine Genauigkeit von einem Fünfhundertstel der inversen Netzfrequenz aufweist, oder genauer, und/oder
- zum Erfassen der Knotenspannungen aller Knotenorte eine gemeinsame Referenzzeit zu Grunde gelegt wird, um eine zeitliche Vergleichbarkeit der Knotenspannungen zu schaffen, wobei die gemeinsame Referenzzeit insbesondere durch ein gemeinsames Zeitsignal bereitgestellt wird, insbesondere durch ein Zeitsignal eines GPS

5. Verfahren nach einem der vorstehenden Ansprüche, **dadurch gekennzeichnet, dass**
- für jeden Knotenort ein Knotenphasenwinkel erfasst wird, und/oder
- für die Knotenspannungen aller Knotenorte ein gemeinsamer Referenzwinkel bereitgestellt wird, und jeder Knotenphasenwinkel als Winkelverschiebung in Bezug auf den Referenzwinkel bestimmt wird, und/oder
- für jeweils zwei Knotenorte eine örtliche Phasenwinkeldifferenz als Differenz der jeweiligen Knotenphasenwinkel bestimmt wird, und insbesondere aus wenigstens einer örtlichen Phasenwinkeldifferenz zweier über einen Verbindungspfad verbundener Knotenorte ein Leistungsfluss in dem Verbindungspfad bestimmt wird.

6. Verfahren nach einem der vorstehenden Ansprüche, **dadurch gekennzeichnet, dass**
- an dem elektrischen Versorgungsnetz mehrere Windenergieanlagen (100) oder Windparks (112) jeweils über einen der Netzanschlusspunkte (118) an das elektrische Versorgungsnetz (120, 500) angeschlossen sind und jeweils eine Anlagensteuerung zum Steuern der Windenergieanlage bzw. eine zentrale Parksteuerung (122) zum Steuern des Windparks aufweisen, wobei
- zum Erfassen jeweils einer der Knotenspannungen von der Anlagensteuerung bzw. der zentralen Parksteuerung erfasste Spannungswerte verwendet werden.

7. Verfahren nach einem der vorstehenden Ansprüche, **dadurch gekennzeichnet, dass**
- aus den Knotenspannungen und dem jeweiligen zugeordneten Knotenort ein Netzzustandsbild erstellt wird, das die über die Netztopologie verteilten Netzzustände wiedergibt, insbesondere über die Netztopologie verteilte Leistungsflüsse, wobei insbesondere
- jeweils eine der Knotenspannungen durch einen Spannungszeiger mit einem Zeitsignal beschrieben wird,
- solche Spannungszeiger für jeden der Knotenorte bestimmt werden, und
- die Spannungszeiger zentral ausgewertet werden, insbesondere in einem Zentralrechner, wobei
- aus den Spannungszeigern und dem jeweiligen zugeordneten Knotenort das Netzzustandsbild erstellt wird.

8. Verfahren nach einem der vorstehenden Ansprüche, **dadurch gekennzeichnet, dass**
- die Netztopologie mehrere örtlich verteilte Übertragungsknoten aufweist, wobei ein Übertragungsknoten jeweils einem der Netzknoten entsprechen kann, und
- ein bzw. das Netzzustandsbild
- eine Netzgruppenzuordnung vorhandener Windenergieanlagen oder Windparks aufweist, die für mehrere der Übertragungsknoten jeweils wenigstens angibt, mit welchen der Windenergieanlagen oder Windparks er ohne Zwischenschaltung eines weiteren Übertragungsknotens verbunden ist, und/oder
- die aktuelle Netztopologie wiedergibt.

9. Verfahren nach einem der vorstehenden Ansprüche, **dadurch gekennzeichnet, dass**
- in Abhängigkeit von den erfassten Knotenspannungen und optional in Abhängigkeit von einer Wettervorhersage und/oder von einer Bedarfsvorhersage
- eine zeit- und ortsabhängige Leistungsprognose verfügbarer und/oder benötigter Leistung erstellt wird, die zu einigen oder allen Netzknoten und/oder Übertragungsknoten jeweils eine zeitliche Prognose, insbesondere einen zeitlichen Verlauf einer Prognose über bereitstellbare und/oder benötige Leistung angibt, wobei
- die Prognose über bereitstellbare Leistung, insbesondere eine Prognose über durch die umrichtergeführten Einspeiseeinheiten bereitstellbare Leistung ist, insbesondere eine Prognose über durch Windenergieanlagen und/oder Windparks bereitstellbare Leistung ist.

10. Verfahren nach einem der vorstehenden Ansprüche, **dadurch gekennzeichnet, dass**
- ein bzw. das Netzzustandsbild eine bzw. die zeit- und ortsabhängige Leistungsprognose umfasst.

11. Verfahren nach einem der vorstehenden Ansprüche, **dadurch gekennzeichnet, dass**
- das elektrische Versorgungsnetz in Abhängigkeit von den erfassten Knotenspannungen, insbesondere in Abhängigkeit von einem bzw. dem Netzzustandsbild, gesteuert wird, insbesondere dadurch, dass
- das elektrische Versorgungsnetz durch Steuern von Schaltern des elektrischen Versorgungsnetzes zum Verändern der Netztopologie gesteuert wird, und/oder dass
- eine, mehrere oder alle der umrichtergeführten Einspeiseeinheiten gesteuert werden.

12. Verfahren nach einem der vorstehenden Ansprüche, **dadurch gekennzeichnet, dass**
- die aus den erfassten Knotenspannungen ermittelten Netzzustände, insbesondere ermittelte Leistungsflüsse, mit gemessenen, oder aus anderen Messwerten als den Knotenspannungen ermittelten Netzzuständen verglichen werden, sodass ein Netzzustandsvergleich gleicher, aber unterschiedlich erfasster Netzzustände vorgenommen wird,
- das Ermitteln der Netzzustände aus den erfassten Knotenspannungen in Abhängigkeit von dem Netzzustandsvergleich angepasst wird, um eine Genauigkeit der Netzzustände zu verbessern, insbesondere so, dass
- das Ermitteln der Netzzustände aus den erfassten Knotenspannungen mittels einer Berechnungsvorschrift durchgeführt wird, und die Berechnungsvorschrift in Abhängigkeit von dem Netzzustandsvergleich angepasst wird.

13. Überwachungsanordnung zum Überwachen eines elektrischen Versorgungsnetzes, wobei
- das elektrische Versorgungsnetz
- eine Netzfrequenz und
- eine Netztopologie mit mehreren Netzknoten aufweist,
- mehrere umrichtergeführte Einspeiseeinheiten jeweils über einen Netzanschlusspunkt an das elektrische Versorgungsnetz angeschlossen sind, und
- die Netzanschlusspunkte über die Netztopologie verteilt sind,
umfassend
- mehrere Erfassungseinrichtungen, vorbereitet zum Erfassen jeweils wenigstens einer Knotenspannung an dem Netzanschlusspunkt oder einem dem Netzanschlusspunkt zugeordneten Netzknoten der mehreren Netzknoten, so dass mehrere Knotenspannungen erfasst werden, wobei
- jedem Netzanschlusspunkt bzw. Netzknoten ein Ort in der Netztopologie zugeordnet ist, der als Knotenort bezeichnet wird, und
- die erfasste Knotenspannung durch einen Knotenphasenwinkel als Phasenwinkel der Knotenspannung gekennzeichnet ist,
- wenigstens eine Zuordnungseinrichtung vorbereitet zum Zuordnen eines zugehörigen Knotenorts zu jeder Knotenspannung, und
- eine zentrale Auswerteeinrichtung vorbereitet zum Ermitteln über die Netztopologie verteilter Netzzustände aus den erfassten Knotenspannungen mit jeweils zugeordnetem Knotenort, insbesondere aus den Knotenphasenwinkeln oder Phasenbeziehungen zwischen wenigstens zwei Netzknoten.

14. Überwachungsanordnung nach Anspruch 13, **dadurch gekennzeichnet, dass**
- wenigstens eine Winkelbestimmungseinrichtung umfasst ist, vorbereitet zum Erfassen eines Knotenphasenwinkels als Phasenwinkel der erfassten Knotenspannung.

15. Überwachungsanordnung nach Anspruch 13 oder 14, **dadurch gekennzeichnet, dass** die Überwachungsanordnung dazu vorbereitet ist, ein Verfahren nach einem der Ansprüche 1 bis 12 durchzuführen.
